(19) Europäisches Patentamt / European Patent Office / Office européen des brevets

(11) **EP 4 510 036 A1**

(12) **EUROPEAN PATENT APPLICATION**
published in accordance with Art. 153(4) EPC

(43) Date of publication:
**19.02.2025 Bulletin 2025/08**

(21) Application number: **23794922.7**

(22) Date of filing: **29.03.2023**

(51) International Patent Classification (IPC):
**G06F 30/394** (2020.01)

(86) International application number:
**PCT/CN2023/084681**

(87) International publication number:
**WO 2023/207487 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.04.2022 CN 202210469023**

(71) Applicant: **Huawei Technologies Co., Ltd.
Shenzhen, Guangdong 518129 (CN)**

(72) Inventors:
• **TANG, Zhentao
Shenzhen, Guangdong 518129 (CN)**

• **KAI, Shixiong
Shenzhen, Guangdong 518129 (CN)**
• **WANG, Bin
Shenzhen, Guangdong 518129 (CN)**
• **SHU, Qin
Shenzhen, Guangdong 518129 (CN)**
• **HUANG, Yu
Shenzhen, Guangdong 518129 (CN)**

(74) Representative: **Maiwald GmbH
Engineering
Elisenhof
Elisenstrasse 3
80335 München (DE)**

(54) **CIRCUIT WIRING DETERMINATION METHOD AND RELATED DEVICE**

(57)     A circuit wiring determining method relates to the field of circuit layouts. The method includes: obtaining information used to describe a port and a pin; determining a plurality of candidate connection paths based on the information about the port and the pin; obtaining a cost value of each candidate connection path by using a machine learning model, where the cost value indicates impact of the candidate connection path on a total quantity of connection paths between a plurality of ports and a plurality of pins; and determining at least one target connection path from the plurality of candidate connection paths based on the cost value. In this application, the cost value of the candidate connection path is effectively evaluated by using the machine learning model, and a preferred target connection path is determined based on the cost value, to increase a quantity of connections between the ports and the pins of an entire circuit.

Obtain first information of a plurality of ports and second information of a plurality of pins of a circuit — 701

Obtain, based on the first information and the second information, a cost value of each candidate connection path by using a machine learning model, where the cost value indicates impact of the candidate connection path on a total quantity of connection paths between the plurality of ports and the plurality of pins, and the cost value is used to determine at least one target connection path from a plurality of candidate connection paths — 702

FIG. 7a

**Description**

This application claims priority to Chinese Patent Application No. 202210469023.1, filed with the China National Intellectual Property Administration on April 29, 2022 and entitled "CIRCUIT WIRING DETERMINING METHOD AND RELATED DEVICE", which is incorporated herein by reference in its entirety.

**TECHNICAL FIELD**

This application relates to the field of circuit layouts, and in particular, to a circuit wiring determining method and a related device.

**BACKGROUND**

Wiring matching between a port and a pin in a circuit, for example, wiring matching between an input/output (input/output, I/O) unit and a bump, is one of important processes in chip design, is time-consuming, and difficult to check, and has a great demand. Generally, wiring matching needs to be checked based on manual experience of a chip designer, and wiring matching of a corresponding pin may be manually adjusted by using interactive software. In addition, an actual quantity of connections between the I/O unit and the bump is increased to a maximum extent while meeting a multi-priority type constraint of the pin.

Currently, a parsing method based on a rule construction constraint is commonly used in the industry to process a problem in automatic wiring matching of the pin of the chip, and implement an automatic wiring function based on a type of the pin of the chip and according to a predefined wiring rule.

However, the parsing method based on the rule construction constraint has poor generalization, complex coupling of wiring rules, high computational complexity, and easy to get stuck in a local extremum solution, resulting in poor overall performance of circuit wiring.

**SUMMARY**

This application provides a circuit wiring determining method, to increase a quantity of connections between a port and a pin during wiring matching.

According to a first aspect, this application provides a circuit wiring determining method. The method includes: obtaining information used to describe a port and a pin; determining a plurality of candidate connection paths based on the information about the port and the pin; obtaining a cost value of each candidate connection path by using a machine learning model, where the cost value indicates impact of the candidate connection path on a total quantity of connection paths between the plurality of ports and the plurality of pins; and determining at least one target connection path from the plurality of candidate connection paths based on the cost value. In this application, the cost value of the candidate connection path is effectively evaluated by using a machine learning model, and a preferred target connection path is determined based on the cost value, to increase the quantity of connections between the ports and the pins of an entire chip.

In a scenario of wiring matching between the port and the pin, a quantity of connections between the port and the pin needs to be increased as much as possible, to improve performance of a chip. In embodiments of this application, to increase the quantity of connections between the port and the pin, impact (namely, the cost value in embodiments of this application) of each candidate connection path on the total quantity of connection paths between the plurality of ports and the plurality of pins may be calculated, and the connection path between the port and the pin is selected based on the cost value.

It should be understood that an implementation of "based on the first information and the second information" herein may be: inputting the first information and the second information into a machine learning model, or inputting, into a machine learning model, a result obtained by performing specific processing or filtering on the first information and the second information, for example, inputting, into the machine learning model, the first information of the port and the second information of the pin included in each candidate connection path (optionally, location information of another location point on the candidate connection path may be further included).

It should be understood that the cost value indicates the impact of the candidate connection path on the total quantity of connection paths between the plurality of ports and the plurality of pins. The finally determined connection paths between the port and the pin do not intersect with each other (for example, the connection paths may be considered to intersect with each other when there is a common relay point). Therefore, determining of each connection path may affect selection of another connection path between the port and the pin to some extent (a connection path with an overlapping path cannot be selected). The "impact" herein may be understood as: if the candidate connection path is used as a connection path between the port and the pin, positive impact or negative impact is caused to the total quantity of connection paths between the plurality of ports and the plurality of pins. The negative impact is used as an example. The cost value may indicate a degree by which the total quantity of connection paths between the plurality of ports and the plurality of pins is decreased if the candidate connection path is used as a connection path between the port and the pin.

It should be understood that the machine learning model may output a plurality of values, and each value may correspond to one candidate connection path. The value may represent positive impact or negative impact on a finally obtained total quantity of connection paths between the ports and the pins if the corresponding candidate connection path is used. In this case, for example, if M candidate connection paths are included between a pin A and a port A, a cost value of a candidate connection path A in the M candidate connection paths is 0.8, and a cost value of a candidate connection path A is 0.2. If the candidate connection path A is selected from the M candidate connection paths as a connection path between the pin A and the port A, the total quantity of connection paths between the plurality of ports and the plurality of pins is finally the quantity A. If the candidate connection path B is selected from the M candidate connection paths as a connection path between the pin A and the port A, the total quantity of connection paths between the plurality of ports and the plurality of pins is finally the quantity B, and the quantity A is less than the quantity B.

It should be understood that the machine learning model may output the cost value of each candidate connection path, and the cost value further has the foregoing meaning (indicating impact of the candidate connection path on the total quantity of connection paths between the plurality of ports and the plurality of pins) because of a capability granted to the machine learning model in a process of training the machine learning model.

In a possible implementation, the port is an input/output I/O unit, and the pin is a transfer unit bump.

In a possible implementation, the method further includes: determining the at least one target connection path from the plurality of candidate connection paths based on the cost value; or sending the cost value to a terminal device, where the cost value indicates the terminal device to determine the at least one target connection path from the plurality of candidate connection paths.

In a possible implementation, the first information may include one or more of a location feature, a function feature, or a priority feature of the port. The second information may be one or more of a location feature, a function feature, or a priority feature of the pin.

In a possible implementation, the location feature may be represented as a coordinate location of a circuit element (for example, the port and the pin). For example, the location feature may be a coordinate location on a 2D plane. More specifically, the location feature may be XY coordinates in a rectangular coordinate system. The location feature may represent an arrangement of circuit elements in space. When wiring matching is performed between circuit elements, a location feature of each element is used as an input of the model, and the location feature may be used to ensure that a wiring path does not overlap with another element, to obtain an accurate wiring matching result.

In a possible implementation, the function feature may represent functions implemented by the circuit element. For example, the functions may include a signal transmission function, an energy transmission function, and a grounding function. When wiring matching is performed between the circuit elements, a function feature of each element is used as an input of the model, and a function feature may be used to ensure that two ends of wiring are elements with a same function, to obtain an accurate wiring matching result.

In a possible implementation, the priority feature may indicate an importance degree of the circuit element, and the importance degree may describe a requirement of the circuit element on a quantity of connections. A higher priority indicates a higher importance degree of the circuit element and a higher requirement of the circuit element on a quantity of connections.

In a possible implementation, circuit elements with different functions may have different priorities, or circuit elements with different functions may have a same priority, or circuit elements with a same function may have different priorities. When wiring matching is performed between the circuit elements, a priority feature of each element is input, and a wiring matching quantity of a high-priority element may be increased as much as possible by using the priority feature.

In a possible implementation, the priority may be determined based on a function of the circuit element, or may be specified based on attribute information (for example, the first information or the second information) input for the circuit element.

In a possible implementation, the based on the first information and the second information includes: based on information about the candidate connection path. The candidate connection path includes the port and the pin at two ends and at least one relay point that the candidate connection path passes through. The relay point is a middle location point between adjacent pins. Information about each candidate connection path includes: first information of the port included in the candidate connection path, second information of the pin included in the candidate connection path, and location information of the at least one relay point.

The information about the plurality of candidate connection paths may include information about each of the plurality of candidate connection paths. Because each candidate connection path may include a start point, at least one relay point, and an end point, the information about each candidate connection path may include information about the start point, location information of the at least one relay point, and information about the end point. The start point may be a port, the information about the start point may include the first information of the port (for example, a location, a function, and a priority of the port), the location information of the relay point may include a location of the relay point, the end point may be a pin, and the information about the end point may include the second information of the pin (for example, a location, a function, and a priority of the port).

In embodiments of this application, each relay point is obtained through path division. The relay point may be used as an endpoint of each sub-segment on the path. The location information of the relay point is used as a model input, to obtain a cost value at a granularity of each sub-segment, so as to obtain a more accurate cost value of the path.

For example, the port, the pin, and the relay point may be encoded. Each port, each pin, or each relay point may uniquely correspond to one encoding result, and a corresponding circuit unit (for example, a port, a pin, or a relay point) may be uniquely determined based on each encoding result. The candidate connection path may be represented by using a sequence of encoding results.

In a possible implementation, the plurality of ports include a plurality of first ports and a plurality of second ports, and the plurality of pins include a plurality of first pins and a plurality of second pins. The plurality of first ports and the plurality of first pins are configured to implement a first function, the plurality of second ports and the plurality of second pins are configured to implement a second function, and the first function is different from the second function. The plurality of candidate connection paths include a plurality of first candidate connection paths formed between the plurality of first ports and the plurality of first pins and a plurality of second candidate connection paths formed between the plurality of second ports and the plurality of second pins. The obtaining, based on the first information and the second information, a cost value of each candidate connection path by using a machine learning model includes: obtaining, based on information about the plurality of first candidate connection paths and information about the plurality of second candidate connection paths, a cost value of each first candidate connection path by using the machine learning model. The determining the at least one target connection path from the plurality of candidate connection paths based on the cost value includes: determining at least one first target connection path from the plurality of first candidate connection paths based on the cost value of each first candidate connection path.

In a possible implementation, in a scenario of wiring matching of the port and the pin, importance of ports and pins with different functions is different. For some ports and pins with more important functions, more connections are required to ensure performance of the chip. For some ports and pins with relatively important functions, a decrease in a quantity of connections greatly affects performance of the chip (compared with ports and pins with less importance). For some ports and pins with unimportant functions, a decrease in a quantity of connections does not affect performance of the chip. In embodiments of this application, the importance may be described as a priority.

Because there are a plurality of priorities, if wiring matching is performed on ports and pins of all priorities at a time, complexity and calculation difficulty of running the machine learning model are greatly increased, it is difficult to ensure calculation precision of wiring, and a good wiring matching result cannot be obtained. In embodiments of this application, wiring calculation is separately performed on ports and pins of all the priorities based on the priorities, so that precision of wiring calculation can be improved.

In a possible implementation, for example, high-priority paths are the plurality of first candidate connection paths, and low-priority paths are the plurality of second candidate connection paths. At least two first candidate connection paths of the plurality of first candidate connection paths may intersect with each other (or may not overlap at all).

In a possible implementation, each second candidate connection path does not intersect with the plurality of first candidate connection paths. In a possible implementation, to avoid a cross conflict with a high-priority wiring path, a low-priority path (namely, an intersecting path) crossed with the high-priority candidate connection path may be removed. Even if the path is not removed, the path is not used as a final connection path. Therefore, in embodiments of this application, the low-priority path crossed with the high-priority candidate connection path is removed. This reduces a size of the solution space, ensures accuracy of wiring calculation, and reduces calculation complexity.

In a possible implementation, at least one second candidate connection path may intersect with at least one first candidate connection path of the plurality of first candidate connection paths. When a model input is determined, if the low-priority path crossed with the high-priority path is not removed, an amount of input information may be increased, that is, information input into the model may describe features of the port and the pin more comprehensively, so that a more accurate cost value can be obtained.

In a possible implementation, at least two second candidate connection paths of the plurality of second candidate connection paths may intersect with each other (or may not overlap at all).

In a possible implementation, the method further includes: outputting a plurality of first initial candidate connection paths formed between the plurality of first ports and the plurality of first pins, and obtaining the plurality of first candidate connection paths based on a modification instruction for at least one first initial candidate connection path of the plurality of first initial candidate connection paths.

In a possible implementation, the method further includes: outputting the at least one first target connection path.

In a possible implementation, a first function or a second function is one of the following: signal transmission, grounding, and electric energy transmission.

In a possible implementation, the obtaining, based on the first information and the second information, a cost value of each candidate connection path by using a machine learning model further includes: obtaining, based on information about the at least one first target connection path and the information about the plurality of second candidate connection paths, a cost value of each second candidate connection path by using the machine learning model. The determining the at least one target connection path from the plurality of candidate connection paths based on the cost value further includes: determining at least one second target connection path from the plurality of second candidate connection paths based on the cost value of each second candidate connection path.

It should be understood that, "based on the information about the at least one first target connection path" may be understood as: inputting, into the machine learning model, first information of a port and second information of a pin (optionally, location information of another location point in the candidate connection path) included in the at least one first target connection path.

It should be understood that, "based on the information about the plurality of second candidate connection paths" may be understood as: inputting, into the machine learning model, first information of a port and second information of a pin (optionally, location information of another location point in the candidate connection path) included in the at least one second target connection path.

In a possible implementation, when the cost value of each second candidate connection path is obtained by using the machine learning model, a first candidate connection path, other than the at least one first target connection path, in the plurality of first candidate connection paths is not used as an input of the machine learning model.

In embodiments of this application, the information about the at least one first target connection path and the information about the plurality of second candidate connection paths may be used as an input of the machine learning model. Because a first candidate connection path, other than the at least one first target connection path, in the plurality of first candidate connection paths is no longer used as a connection path between the first port and the first pin, the first candidate connection path, other than the at least one first target connection path, in the plurality of first candidate connection paths may not be used as an input of the machine learning model. In this way, operation complexity can be reduced while ensuring wiring determining precision.

In a possible implementation, the plurality of candidate connection paths further include at least one third candidate connection path formed between the plurality of second ports and the plurality of second pins. The based on information about the at least one first target connection path and the information about the plurality of second candidate connection paths includes: based on the information about the at least one first target connection path, the information about the plurality of second candidate connection paths, and information about the at least one third candidate connection path.

In a possible implementation, when a second-priority connection path is determined, a path (at least one third candidate connection path) that intersects with the first candidate connection path, other than the at least one first target connection path, in the plurality of first candidate connection paths may be used as an input of the model, to increase an amount of input information. In other words, the information input into the model may more comprehensively describe the features of the port and the pin, so that a more accurate cost value can be obtained.

In a possible implementation, the method further includes: outputting a plurality of second initial candidate connection paths formed between the plurality of second ports and the plurality of second pins, and obtaining a plurality of second candidate connection paths based on a modification instruction for at least one second initial candidate connection path of the plurality of second initial candidate connection paths.

In a possible implementation, the method further includes: outputting the at least one second target connection path.

In a possible implementation, any two target connection paths of the at least one target connection path do not intersect with each other.

In a possible implementation, the method further includes: obtaining at least one modified first target connection path based on modification information of the at least one first target connection path. The based on information about the at least one first target connection path and the information about the plurality of second candidate connection paths includes: based on information about the at least one modified first target connection path and the information about the plurality of second candidate connection paths.

In a possible implementation, the first information indicates that a priority of the first port is higher than a priority of the second port; or the second information indicates that a priority of the first pin is higher than a priority of the second pin.

In a possible implementation, the determining the at least one target connection path from the plurality of candidate connection paths based on the cost value includes: determining, based on the cost value, the at least one target connection path from the plurality of candidate connection paths by using a minimum cost maximum flow algorithm.

According to a second aspect, this application provides a circuit wiring determining method. The method includes:

obtaining first information of a plurality of input/output ports and second information of a plurality of transfer unit pins of a circuit, where the plurality of ports include a plurality of first ports and a plurality of second ports, the plurality of pins include a plurality of first pins and a plurality of second pins, a plurality of first candidate connection paths are formed between the plurality of first ports and the plurality of first pins, a plurality of second candidate connection paths are formed between the plurality of second ports and the plurality of second pins, the first information indicates a location feature of the port, and the second information indicates a location feature of the pin;

indicating, based on the first information and the second information, that importance of the first port is higher than importance of the second port, and determining at least one first target connection path from the plurality of first candidate connection paths based on information about the plurality of first candidate connection paths and information about the plurality of second candidate connection paths; and

determining at least one second target connection path from the plurality of second candidate connection paths based on information about the at least one first target connection path and the information about the plurality of second candidate connection paths.

In a possible implementation, the port is an input/output I/O unit, and the pin is a transfer unit bump.

In a possible implementation, at least two first candidate connection paths of the plurality of first candidate connection paths intersect with each other; or

each second candidate connection path does not intersect with the plurality of first candidate connection paths; or
the at least one second candidate connection path intersects with the at least one first candidate connection path of the plurality of first candidate connection paths; or
at least two second candidate connection paths of the plurality of second candidate connection paths intersect with each other.

In a possible implementation, the method further includes:
outputting a plurality of first initial candidate connection paths formed between the plurality of first ports and the plurality of first pins, and obtaining the plurality of first candidate connection paths based on a modification instruction for at least one first initial candidate connection path of the plurality of first initial candidate connection paths.

In a possible implementation, the method further includes:
outputting the at least one first target connection path.

In a possible implementation, a first function or a second function is one of the following: signal transmission, grounding, and electric energy transmission.

In a possible implementation, the based on information about the at least one first target connection path and the information about the plurality of second candidate connection paths includes:
based on the information about the at least one first connection path and the information about the plurality of second candidate connection paths, and not based on information about a first candidate connection path, other than the at least one first target connection path, in the plurality of first candidate connection paths.

In a possible implementation, the method further includes:
outputting a plurality of second initial candidate connection paths formed between the plurality of second ports and the plurality of second pins, and obtaining a plurality of second candidate connection paths based on a modification instruction for at least one second initial candidate connection path of the plurality of second initial candidate connection paths.

In a possible implementation, the method further includes:
outputting the at least one second target connection path.

In a possible implementation, any two connection paths of the at least one first target connection path do not intersect with each other, any two connection paths of the at least one second target connection path do not intersect with each other, and each first target connection path does not intersect with any second target connection path of the at least one second target connection path.

In a possible implementation, the method further includes:
obtaining at least one modified first target connection path based on modification information of the at least one first target connection path.

The based on information about the at least one first target connection path and the information about the plurality of second candidate connection paths includes: based on information about the at least one modified first target connection path and the information about the plurality of second candidate connection paths.

According to a third aspect, this application provides a circuit wiring determining apparatus. The apparatus includes:

an obtaining module, configured to obtain first information of a plurality of ports and second information of a plurality of pins of a circuit, where a plurality of candidate connection paths are included between the plurality of ports and the plurality of pins, and the candidate connection path is a connection path between the port and the pin; and
a cost value determining module, configured to obtain, based on the first information and the second information, a cost value of each candidate connection path by using a machine learning model, where the cost value indicates impact of the candidate connection path on a total quantity of connection paths between the plurality of ports and the plurality of pins, and the cost value is used to determine at least one target connection path from the plurality of candidate connection paths.

In this application, the cost value of the candidate connection path is effectively evaluated by using a machine learning model, and a preferred target connection path is determined based on the cost value, to increase the quantity of connections between the ports and the pins of an entire chip.

In a possible implementation, the port is an input/output I/O unit, and the pin is a transfer unit bump.

In a possible implementation, the apparatus further includes:

a wiring determining module, configured to determine the at least one target connection path from the plurality of candidate connection paths based on the cost value; or
a sending module, configured to send the cost value to a terminal device, where the cost value indicates the terminal device to determine the at least one target connection path from the plurality of candidate connection paths based on the cost value.

In a possible implementation, the cost value indicates negative impact of the candidate connection path on the total quantity of connection paths between the plurality of ports and the plurality of pins, the plurality of candidate connection paths include a plurality of groups of candidate connection paths, and each group of candidate connection paths of the plurality of groups of candidate connection paths corresponds to a pair of a port and a pin.

The wiring determining module is specifically configured to:
determine, from each group of candidate connection paths based on the cost value, a candidate connection path with a lowest cost value as the target connection path.

In a possible implementation, the first information further indicates at least one of the following information: a function of the port or a priority of the port.

The second information further indicates at least one of the following information: a function of the pin or a priority of the pin.

In a possible implementation, the candidate connection path includes the port and the pin at two ends, at least one relay point that the candidate connection path passes through, and the relay point is a middle location point between adjacent pins.

The based on the first information and the second information includes:
based on first information of the port included in the candidate connection path, second information of the pin included in the candidate connection path, and location information of the at least one relay point.

In a possible implementation, the plurality of ports include a plurality of first ports and a plurality of second ports, and the plurality of pins include a plurality of first pins and a plurality of second pins. The plurality of first ports and the plurality of first pins are configured to implement a first function, the plurality of second ports and the plurality of second pins are configured to implement a second function, and the first function is different from the second function.

The plurality of candidate connection paths include a plurality of first candidate connection paths formed between the plurality of first ports and the plurality of first pins and a plurality of second candidate connection paths formed between the plurality of second ports and the plurality of second pins.

The cost value determining module is specifically configured to obtain, based on information about the plurality of first candidate connection paths and information about the plurality of second candidate connection paths, a cost value of each first candidate connection path by using the machine learning model.

The wiring determining module is specifically configured to determine at least one first target connection path from the plurality of first candidate connection paths based on a cost value of each first candidate connection path.

In a possible implementation, at least two first candidate connection paths of the plurality of first candidate connection paths intersect with each other; or

each second candidate connection path does not intersect with the plurality of first candidate connection paths; or
the at least one second candidate connection path intersects with the at least one first candidate connection path of the plurality of first candidate connection paths; or
at least two second candidate connection paths of the plurality of second candidate connection paths intersect with each other.

In a possible implementation, the apparatus further includes:
an output module, configured to output the at least one first target connection path.

In a possible implementation, the output module is further configured to:

output a plurality of first initial candidate connection paths between the plurality of first ports and the plurality of first pins, and obtain the plurality of first candidate connection paths based on a modification instruction for at least one first initial candidate connection path of the plurality of first initial candidate connection paths.

In a possible implementation, the cost value determining module is further configured to obtain, based on information about the at least one first target connection path and the information about the plurality of second candidate connection paths, a cost value of each second candidate connection path by using the machine learning model.

The wiring determining module is further configured to determine at least one second target connection path from the plurality of second candidate connection paths based on the cost value of each second candidate connection path.

In a possible implementation, the plurality of candidate connection paths further include at least one third candidate connection path formed between the plurality of second ports and the plurality of second pins. The cost value determining module is specifically configured to:

be based on the information about the at least one first target connection path, the information about the plurality of second candidate connection paths, and information about the at least one third candidate connection path.

In a possible implementation, a first function or a second function is one of the following: signal transmission, grounding, and electric energy transmission.

In a possible implementation, the output module is further configured to:

output the at least one second target connection path.

In a possible implementation, any two target connection paths of the at least one target connection path do not intersect with each other.

In a possible implementation, the output module is further configured to:

output a plurality of second initial candidate connection paths formed between the plurality of second ports and the plurality of second pins, and obtain a plurality of second candidate connection paths based on a modification instruction for at least one second initial candidate connection path of the plurality of second initial candidate connection paths.

In a possible implementation, any two target connection paths of the at least one target connection path do not intersect with each other.

In a possible implementation, the obtaining module is further configured to:

obtain at least one modified first target connection path based on modification information of the at least one first target connection path.

The based on information about the at least one first target connection path and the information about the plurality of second candidate connection paths includes: based on information about the at least one modified first target connection path and the information about the plurality of second candidate connection paths.

In a possible implementation, the first information indicates that a priority of the first port is higher than a priority of the second port; or the second information indicates that a priority of the first pin is higher than a priority of the second pin.

In a possible implementation, the wiring determining module is specifically configured to:

determine, based on the cost value, the at least one target connection path from the plurality of candidate connection paths by using a minimum cost maximum flow algorithm.

According to a fourth aspect, this application provides a circuit wiring determining apparatus. The apparatus includes:

an obtaining module, configured to obtain first information of a plurality of input/output ports and second information of a plurality of transfer unit pins of a circuit, where the plurality of ports include a plurality of first ports and a plurality of second ports, the plurality of pins include a plurality of first pins and a plurality of second pins, a plurality of first candidate connection paths are formed between the plurality of first ports and the plurality of first pins, and a plurality of second candidate connection paths are formed between the plurality of second ports and the plurality of second pins; and

a wiring determining module, configured to: determine, based on a premise that the first information and the second information indicate that importance of the first port is higher than importance of the second port, at least one first target connection path from the plurality of first candidate connection paths based on information about the plurality of first candidate connection paths and information about the plurality of second candidate connection paths; and

determine at least one second target connection path from the plurality of second candidate connection paths based on information about the at least one first target connection path and the information about the plurality of second candidate connection paths.

In a possible implementation, the port is an input/output I/O unit, and the pin is a transfer unit bump.

In a possible implementation, at least two first candidate connection paths of the plurality of first candidate connection paths intersect with each other; or

each second candidate connection path does not intersect with the plurality of first candidate connection paths; or

the at least one second candidate connection path intersects with the at least one first candidate connection path of the plurality of first candidate connection paths; or

at least two second candidate connection paths of the plurality of second candidate connection paths intersect with each other.

In a possible implementation, the apparatus further includes:

an output module, configured to: output a plurality of first initial candidate connection paths formed between the plurality of first ports and the plurality of first pins, and obtain the plurality of first candidate connection paths based on a modification instruction for at least one first initial candidate connection path of the plurality of first initial candidate connection paths.

In a possible implementation, the apparatus further includes:

an output module, configured to output the at least one first target connection path.

In a possible implementation, a first function or a second function is one of the following: signal transmission, grounding, and electric energy transmission.

In a possible implementation, the based on information about the at least one first target connection path and the information about the plurality of second candidate connection paths includes:

based on the information about the at least one first connection path and the information about the plurality of second candidate connection paths, and not based on information about a first candidate connection path, other than the at least one first target connection path, in the plurality of first candidate connection paths.

In a possible implementation, the output module is further configured to:

output a plurality of second initial candidate connection paths formed between the plurality of second ports and the plurality of second pins, and obtain a plurality of second candidate connection paths based on a modification instruction for at least one second initial candidate connection path of the plurality of second initial candidate connection paths.

In a possible implementation, the output module is further configured to:

output the at least one second target connection path.

In a possible implementation, any two connection paths of the at least one first target connection path do not intersect with each other, any two connection paths of the at least one second target connection path do not intersect with each other, and each first target connection path does not intersect with any second target connection path of the at least one second target connection path.

In a possible implementation, the obtaining module is further configured to:

obtain at least one modified first target connection path based on modification information of the at least one first target connection path.

The based on information about the at least one first target connection path and the information about the plurality of second candidate connection paths includes: based on information about the at least one modified first target connection path and the information about the plurality of second candidate connection paths.

According to a fifth aspect, an embodiment of this application provides a circuit wiring determining apparatus. The apparatus may include a memory, a processor, and a bus system. The memory is configured to store a program, and the processor is configured to execute the program in the memory, to perform the method according to any one of the first aspect and the optional implementations of the first aspect or the method according to any one of the second aspect and the optional implementations of the second aspect.

According to a sixth aspect, an embodiment of this application provides a computer-readable storage medium. The computer-readable storage medium stores a computer program. When the computer program is run on a computer, the computer is enabled to perform the method according to any one of the first aspect and the optional implementations of the first aspect or the method according to any one of the second aspect and the optional implementations of the second aspect.

According to a seventh aspect, an embodiment of this application provides a computer program product including instructions. When the computer program product runs on a computer, the computer is enabled to perform the method according to any one of the first aspect and the optional implementations of the first aspect or the method according to any one of the second aspect and the optional implementations of the second aspect.

According to an eighth aspect, this application provides a chip system. The chip system includes a processor, configured to support a circuit wiring determining apparatus in implementing some or all functions in the foregoing aspects, for example, sending or processing data or information in the foregoing methods. In a possible design, the chip system further includes a memory. The memory is configured to store necessary program instructions and data of the execution device or the training device. The chip system may include a chip, or may include a chip and another discrete component.

**BRIEF DESCRIPTION OF DRAWINGS**

FIG. 1 is a schematic diagram of an application architecture;

FIG. 2 is a schematic diagram of an application architecture;

FIG. 3 is a schematic diagram of an application architecture;

FIG. 4 is a schematic diagram of an application architecture;

FIG. 5a is a schematic diagram of an application architecture;

FIG. 5b is a schematic diagram of an application architecture;

FIG. 6 is a schematic diagram of an application architecture;

FIG. 7a is a schematic diagram of an embodiment of a circuit wiring determining method according to an embodiment of this application;

FIG. 7b is a schematic diagram of an embodiment of a circuit wiring determining method according to an embodiment of this application;

FIG. 7c is a schematic diagram of an embodiment of a circuit wiring determining method according to an embodiment of this application;

FIG. 7d is a schematic diagram of an embodiment of a circuit wiring determining method according to an embodiment of this application;

FIG. 7e is a schematic diagram of an embodiment of a circuit wiring determining method according to an embodiment of this application;

FIG. 7f is a schematic diagram of an embodiment of a circuit wiring determining method according to an embodiment of this application;

FIG. 8 is a schematic diagram of an interface according to an embodiment of this application;

FIG. 9 is a schematic diagram of an interface according to an embodiment of this application;

FIG. 10a is a schematic diagram of an interface according to an embodiment of this application;

FIG. 10b is a schematic diagram of an interface according to an embodiment of this application;

FIG. 11a is a schematic diagram of an interface according to an embodiment of this application;

FIG. 11b is a schematic diagram of an interface according to an embodiment of this application;

FIG. 12 is a schematic diagram of an interface according to an embodiment of this application;

FIG. 13 is a schematic diagram of an interface according to an embodiment of this application;

FIG. 14 is a schematic diagram of an interface according to an embodiment of this application;

FIG. 15 is a schematic diagram of an interface according to an embodiment of this application;

FIG. 16 is a schematic diagram of an interface according to an embodiment of this application;

FIG. 17 is a schematic diagram of an interface according to an embodiment of this application;

FIG. 18 is a schematic diagram of an interface according to an embodiment of this application;

FIG. 19 is a schematic diagram of an interface according to an embodiment of this application;

FIG. 20 is a schematic diagram of an embodiment of a circuit wiring determining method according to an embodiment of this application;

FIG. 21 is a schematic diagram of an embodiment of a circuit wiring determining method according to an embodiment of this application;

FIG. 22 is a schematic diagram of an embodiment of a circuit wiring determining method according to an embodiment of this application;

FIG. 23 is a schematic diagram of an embodiment of a circuit wiring determining apparatus according to an embodiment of this application;

FIG. 24 is a schematic diagram of an embodiment of a circuit wiring determining apparatus according to an embodiment of this application;

FIG. 25 is a schematic diagram of a structure of an execution device according to an embodiment of this application;

FIG. 26 is a schematic diagram of a structure of a server according to an embodiment of this application; and

FIG. 27 is a schematic diagram of a structure of a chip according to an embodiment of this application.

## DESCRIPTION OF EMBODIMENTS

The following describes embodiments of the present invention with reference to the accompanying drawings in embodiments of the present invention. Terms used in implementation parts of the present invention are merely used to explain specific embodiments of the present invention, but are not intended to limit the present invention.

The following describes embodiments of this application with reference to accompanying drawings. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

It should be understood that when an element or a layer is located on (on)", "connected to (connected to)", or "coupled to (coupled to)" another element or layer, the element or layer may be located directly on the another element or layer, or directly connected to or directly coupled to the another element or layer, or one or more intermediate elements or layers may exist. It should also be understood that, when an element or a layer is located "between (between)" two elements or layers, the element or layer may be a unique element or layer between the two elements or layers, or one or more intermediate elements or layers may exist.

The terms "substantially (substantially)", "about (about)", and the like are used herein as approximation terms rather than as degree terms, and are intended to take into account inherent deviations of measured values or calculated values that are known to those of ordinary skill in the art. In addition, when embodiments of the present invention are described, "may (may)" is used to indicate "one or more possible embodiments". The terms "use (use)", "using (using)", and "used (used)" used in this specification may be considered to be synonymous with the terms "utilize (utilize)", "utilizing (utilizing)", and "utilized (utilized)", respectively. In addition, the term "exemplary (exemplary)" is intended to represent an instance or an example.

Application scenarios of this application are first described. This application may be applied to, but is not limited to, a circuit design application, a cloud service provided by a cloud server, and the like. The following separately describes the application scenario.

1. Circuit design application

A product form in embodiments of this application may be a circuit design application, for example, a chip design application. For another example, the product form may be specifically electronic design automation (electronic design automation, EDA) software. The EDA may be run on a terminal device or a server on a cloud side.

The EDA is used as an example. In a possible implementation, the EDA may implement a task of automatic connection of pins of a circuit. The EDA may generate a circuit layout in response to an input circuit parameter (for example, the circuit layout may be expressed in a form of a schematic circuit diagram). In embodiments of this application, the circuit parameter may be information about a pin unit, and the generated schematic circuit diagram or circuit layout may include a connection relationship between pin units.

The schematic diagram may be optionally processed by an electronic design automation (EDA) software system (for example, a schematic diagram of a transistor and a layout editing tool (for example, Mentor)) to generate the layout, and execute layout versus schematic (layout versus schematic, LVS) and/or perform design rule check (design rule check, DRC). In addition, the schematic diagram may be sent to a manufacturing facility (for example, semiconductor manufacturing or "FAB") to (for example) produce an integrated circuit (for example, a chip) with a desired property. Generally, a schematic diagram for an analog integrated circuit may be designed by a person skilled in an analog circuit design with a large amount of time and effort. Advantageously, a system and a method using the technology described herein may generate a schematic diagram for an electronic circuit (for example, a complete chip) very quickly and in substantially less time than designing each circuit using the conventional technology.

A port in embodiments of this application may be an input/output (input/output, I/O) unit, and the pin may be a transfer unit bump.

In a possible implementation, the I/O unit may be located in an edge area of the circuit (for example, the chip), the I/O unit may be responsible for connecting to an external element, and the I/O unit may be used as a port for performing functions such as data exchange and energy transfer with the external element.

The transfer unit (bump) may also be referred to as a wafer, a bump, or a protrusion, and is located in an internal area of the circuit (for example, the chip), and the bump may be connected to the I/O unit, and perform data exchange, energy transfer, and the like with the I/O unit.

A connection between the I/O unit and the bump is one of important procedures of a circuit design. To improve performance of the circuit, a quantity of I/O-bump connections needs to be increased to a maximum extent.

The following separately describes the circuit design application in embodiments of this application from a perspective of a functional architecture and a product architecture for implementing a function.

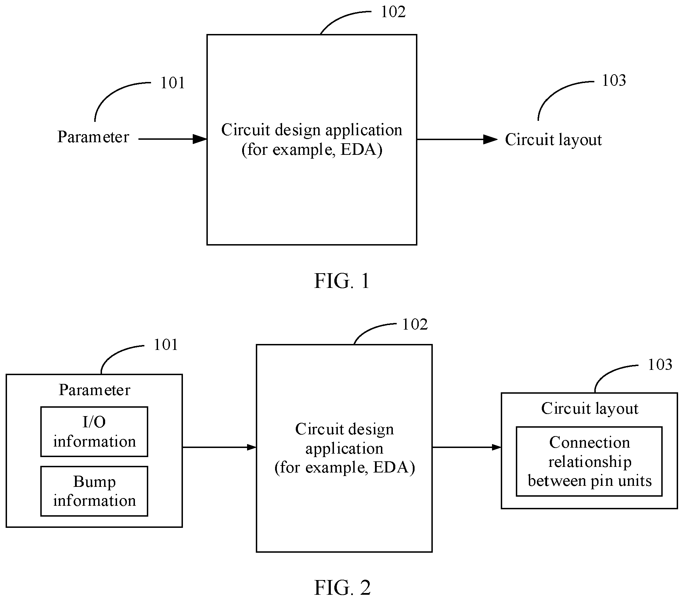

FIG. 1 is a schematic diagram of a functional architecture of a circuit design application according to an embodiment of this application.

In a possible implementation, embodiments of this application include a system (for example, the circuit design application) that can automatically generate a schematic circuit diagram based on an input parameter. Different parameter values are input to a system, so that different schematic circuit diagrams can be automatically generated. As shown in FIG. 1, a circuit design application 102 can receive an input parameter 101 and generate a schematic circuit diagram 103. The circuit design application 102 may be executed (for example) on at least one computer system and includes computer code. When the computer code is executed by one or more computers, the computer is enabled to perform a circuit wiring determining method described in this specification.

Refer to FIG. 2. In a possible implementation, the parameter may include text of a specified circuit component (for example, an "I/O unit" or a "bump") or (for example) one or more identifiers (ID), for example, one or more codes, used to uniquely determine a rule set applied to a corresponding circuit component. The parameter may be used to describe a feature, for example, a location feature, a function feature, or a priority feature (the foregoing three features are described in subsequent embodiments, and details are not described herein), of the circuit component (for example, the "I/O unit" or the "bump").

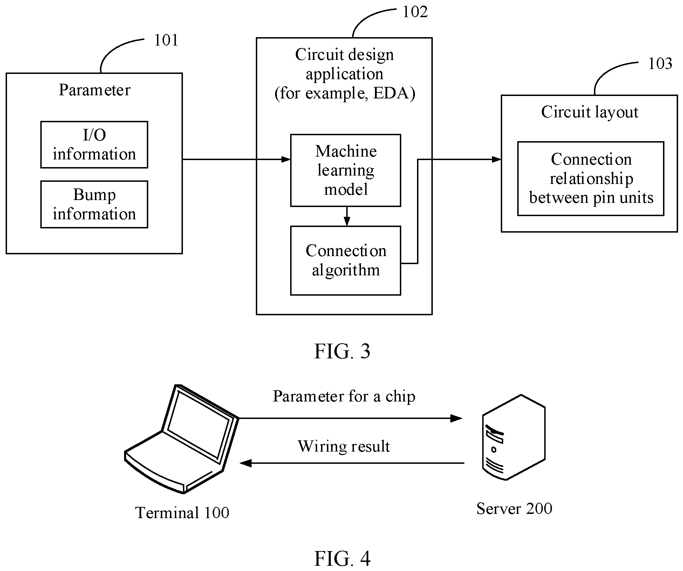

Refer to FIG. 3. In a possible implementation, the circuit design application may include a machine learning model and a connection algorithm (for example, a minimum cost maximum flow algorithm in embodiments of this application). Optionally, information about the I/O unit and information about the bump may be input into the machine learning model, to obtain a cost value of each candidate connection path, so as to obtain and output, based on the cost value, a wiring design result (for example, a schematic circuit diagram) by using the connection algorithm.

For example, the wiring design result may be sent to a manufacturing facility to (for example) produce an integrated circuit (for example, a chip) with a desired property.

In a possible implementation, circuit design software may be run on a terminal device on a terminal side or run on a server on a cloud side.

For example, the circuit design software may be installed on the terminal device, and actions including data input, data processing (for example, the circuit wiring determining method in embodiments of this application), and data output may be performed by the terminal device.

For example, the terminal device may be a client installed with the circuit design software, and actions including data input and data output may be performed by the terminal device. An action of data processing (for example, the circuit wiring determining method in embodiments of this application) may be performed by the server on the cloud side. In other words, the terminal device may transmit data required for data processing (for example, the circuit wiring determining method in embodiments of this application) to the server on the cloud side. After performing the action of data processing, the server on the cloud side may return a data processing result to the terminal device on the terminal side, and the terminal device performs output based on the processing result.

The following describes an entity architecture for running the circuit design application in embodiments of this application.

FIG. 4 is a schematic diagram of an entity architecture for running a circuit design application according to an embodiment of this application.

FIG. 4 is a schematic diagram of an architecture of a system. The system may include a terminal 100 and a server 200. The server 200 may include one or more servers (in FIG. 4, an example in which one server is included is used for description), and the server 200 may provide a circuit wiring service for one or more terminals.

A circuit design application may be installed on the terminal 100, or a web page related to a circuit design may be opened on the terminal 100. The application or the web page may provide a circuit design interface. The terminal 100 may receive a related parameter entered by a user on the circuit design interface, and send the parameter to the server 200. The server 200 may obtain a processing result based on the received parameter, and return the processing result to the terminal 100.

It should be understood that in some optional implementations, the terminal 100 may alternatively complete an action of obtaining a data processing result based on a received parameter without cooperation of the server. This is not limited in embodiments of this application.

The following describes a product form of the terminal 100 in FIG. 4.

The terminal 100 in embodiments of this application may be a mobile phone, a tablet computer, a wearable device, a vehicle-mounted device, an augmented reality (augmented reality, AR) device/a virtual reality (virtual reality, VR) device, a notebook computer, an ultra-mobile personal computer (ultra-mobile personal computer, UMPC), a netbook, a personal digital assistant (personal digital assistant, PDA), or the like. This is not limited in embodiments of this application.

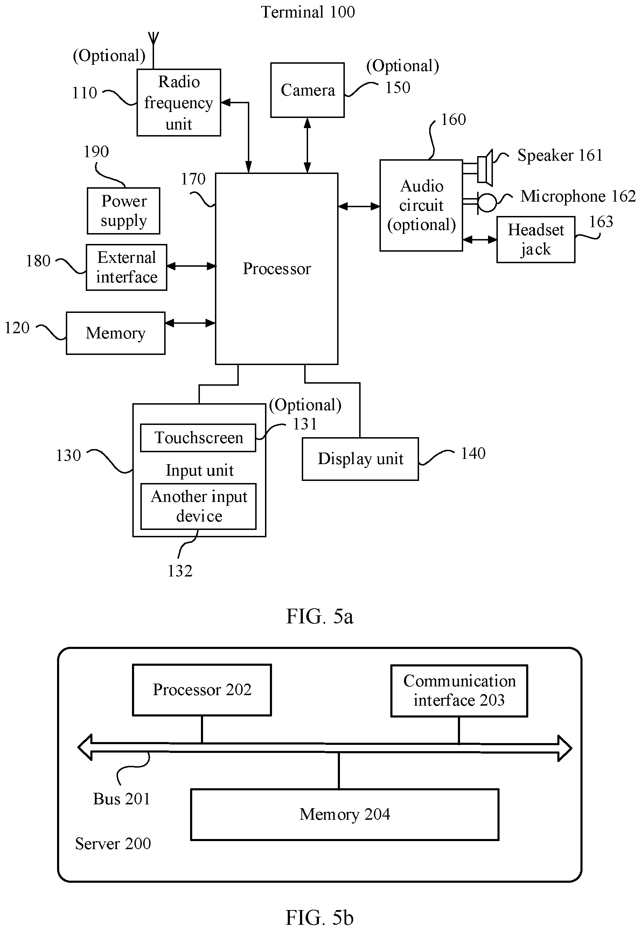

FIG. 5a is a schematic diagram of an optional hardware structure of the terminal 100.

Refer to FIG. 5a. The terminal 100 may include components such as a radio frequency unit 110, a memory 120, an input unit 130, a display unit 140, a camera 150 (optional), an audio circuit 160 (optional), a speaker 161 (optional), a microphone 162 (optional), a processor 170, an external interface 180, and a power supply 190. A person skilled in the art may understand that FIG. 5a is merely an example of a terminal or a multifunctional device and does not constitute a limitation on the intelligent terminal or the multifunctional device. The terminal or the multifunctional device may include more or fewer components than those shown in the figure, or combine some of the components, or have different components.

The input unit 130 may be configured to receive an input digit or character information, and generate a key signal input related to user setting and function control of the portable multifunctional apparatus. Specifically, the input unit 130 may include a touchscreen 131 (optional) and/or another input device 132. The touchscreen 131 may collect a touch operation (for example, an operation performed by the user on the touchscreen 131 or near the touchscreen 131 by using any proper object, for example, a finger, a joint, or a stylus) of the user on or near the touchscreen 131, and drive a corresponding connection apparatus based on a preset program. The touchscreen may detect a touch operation of the user on the touchscreen, convert the touch operation to a touch signal and send the touch signal to the processor 170, and can receive and execute a command sent by the processor 170. The touch signal includes at least touch point coordinate information. The touchscreen 131 may provide an input interface and an output interface between the terminal 100 and the user. In addition, the touchscreen may be implemented in a plurality of types, such as a resistive type, a capacitive type, an infrared ray type, and a surface acoustic wave type. In addition to the touchscreen 131, the input unit 130 may include the another input device. Specifically, the another input device 132 may include, but is not limited to, one or more of a physical keyboard, a function key (for example, a volume control key 132 or a power on/off key 133), a trackball, a mouse, or a joystick.

The input device 132 may receive a parameter related to a circuit wiring design, for example, first information of the I/O unit, second information of the bump, and a modification instruction for a candidate connection path in embodiments of this application.

The display unit 140 may be configured to display information entered by the user or information provided for the user, various menus of the terminal 100, an interaction interface, file display, and/or playing of any multimedia file. In embodiments of this application, the display unit 140 may be configured to display an interface of the circuit design application, a wiring design result, a schematic diagram of the candidate connection path, and the like.

The memory 120 may be configured to store instructions and data. The memory 120 may mainly include an instruction storage area and a data storage area. The data storage area may store various kinds of data such as a multimedia file and a text. The instruction storage area may store software units such as an operating system, an application, and instructions required by at least one function, or subsets and extended sets thereof. The memory 120 may further include a non-volatile random access memory, and provide hardware, software, a data resource, and the like in a management and calculation processing device to the processor 170, to support control on software and an application. The memory 120 is further configured to: store a multimedia file, and run a program and store an application.

The processor 170 is a control center of the terminal 100, connects various parts of the entire terminal 100 by using various interfaces and lines, and executes various functions of the terminal 100 and processes data by running or executing the instructions stored in the memory 120 and invoking the data stored in the memory 120, to entirely control the terminal device. Optionally, the processor 170 may include one or more processing units. Preferably, an application processor and a modem processor may be integrated into the processor 170. The application processor mainly processes an operating system, a user interface, an application, and the like. The modem processor mainly processes wireless communication. It can be understood that the modem processor may not be integrated into the processor 170. In some embodiments, the processor and the memory may be implemented on a single chip. In other embodiments, the processor and the memory may be implemented on separate chips. The processor 170 may be further configured to: generate a corresponding operation control signal, and send the operation control signal to a corresponding component in the calculation processing device, and read and process data in software, especially read and process the data and the program in the memory 120, so that function modules perform corresponding functions, to control a corresponding component to perform an operation as required by an instruction.

The memory 120 may be configured to store software code related to a circuit wiring determining method. The processor 170 may perform steps of the circuit wiring determining method of the chip, or may schedule other units (for example, the input unit 130 and the display unit 140) to implement corresponding functions.

The radio frequency unit 110 (optional) may be configured to receive and send a signal in an information receiving and sending process or a call process. For example, after receiving downlink information of a base station, the radio frequency unit 110 sends the downlink information to the processor 170 for processing. In addition, the radio frequency unit 110 sends designed uplink data to the base station. Usually, an RF circuit includes but is not limited to an antenna, at least one amplifier, a transceiver, a coupler, a low noise amplifier (Low Noise Amplifier, LNA), a duplexer, and the like. In addition, the radio frequency unit 110 may further communicate with a network device and another device through wireless communication. The wireless communication may use any communication standard or protocol, including but not limited to a global system for mobile communications (Global System of Mobile communication, GSM), a general packet radio service (General Packet Radio Service, GPRS), code division multiple access (Code Division Multiple Access, CDMA), wideband code division multiple access (Wideband Code Division Multiple Access, WCDMA), long term evolution (Long Term Evolution, LTE), an email, a short message service (Short Messaging Service, SMS), and the like.

In embodiments of this application, the radio frequency unit 110 may send a parameter of the chip to the server 200, and receive a wiring design result sent by the server 200.

It should be understood that the radio frequency unit 110 is optional, and may be replaced with another communication interface, for example, may be a network interface.

The terminal 100 further includes the power supply 190 (for example, a battery) for supplying power to the components. Preferably, the power supply may be logically connected to the processor 170 by using a power management system, to implement functions such as charging, discharging, and power consumption management by using the power management system.

The terminal 100 further includes the external interface 180. The external interface may be a standard Micro USB interface, or may be a multi-pin connector, and may be configured to connect the terminal 100 to another apparatus for communication, or may be configured to connect to a charger to charge the terminal 100.

Although not shown, the terminal 100 may further include a flash, a wireless fidelity (wireless fidelity, Wi-Fi) module, a Bluetooth module, sensors with different functions, and the like. Details are not described herein. Some or all of the methods described below may be applied to the terminal 100 shown in FIG. 5a.

The following describes a product form of the server 200 in FIG. 4.

FIG. 5b provides a schematic diagram of a structure of the server 200. As shown in FIG. 5b, the server 200 includes a bus 201, a processor 202, a communication interface 203, and a memory 204. The processor 202, the memory 204, and the communication interface 203 communicate with each other through the bus 201.

The bus 201 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one thick line is used to represent the bus in FIG. 5b, but this does not mean that there is only one bus or only one type of bus.

The processor 202 may be any one or more of processors such as a central processing unit (central processing unit, CPU), a graphics processing unit (graphics processing unit, GPU), a microprocessor (microprocessor, MP), or a digital signal processor (digital signal processor, DSP).

The memory 204 may include a volatile memory (volatile memory), for example, a random access memory (random access memory, RAM). The memory 204 may further include a non-volatile memory (non-volatile memory), for example, a read-only memory (read-only memory, ROM), a flash memory, a mechanical hard disk drive (hard disk drive, HDD), or a solid state drive (solid state drive, SSD).

The memory 204 may be configured to store software code related to a circuit wiring determining method. The processor 202 may perform steps of the circuit wiring determining method of the chip, or may schedule other units to implement corresponding functions.

It should be understood that the terminal 100 and the server 200 may be centralized or distributed devices. The processor (for example, the processor 170 or the processor 202) in the terminal 100 or the server 200 may be a hardware circuit (for example, an application-specific integrated circuit (application-specific integrated circuit, ASIC), a field programmable gate array (field programmable gate array, FPGA), a general purpose processor, a digital signal processor (digital signal processing, DSP), a microprocessor, or a microcontroller), or a combination of these hardware circuits. For example, the processor may be a hardware system having an instruction execution function, for example, a CPU or a DSP, a hardware system having no instruction execution function, for example, an ASIC or an FPGA, or a combination of the foregoing hardware system having no instruction execution function and the foregoing hardware system having an instruction execution function.

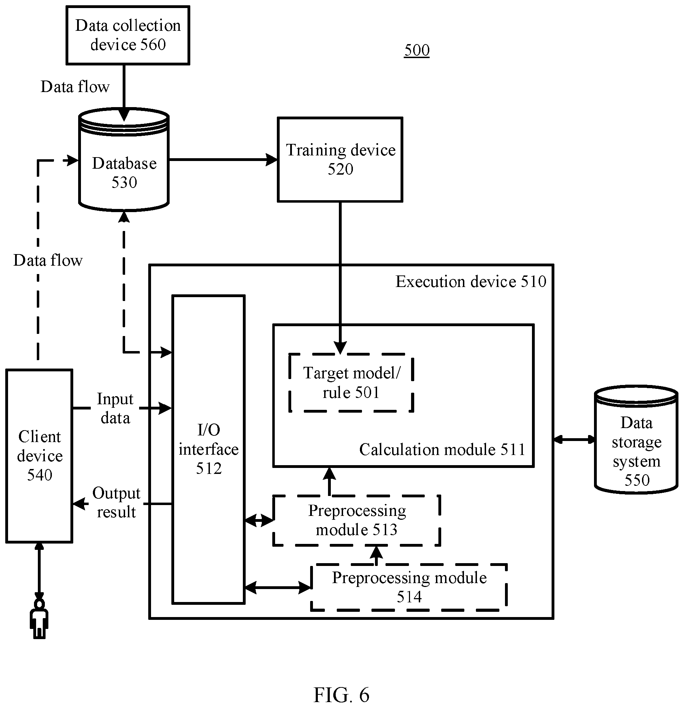

It should be understood that the circuit wiring determining method in embodiments of this application relates to an AI-related operation. When the AI operation is performed, an instruction execution architecture of the terminal device or the server is not limited to the architecture that is shown in FIG. 5a or FIG. 5b and in which the processor is combined with the memory. A system architecture provided in embodiments of this application is described below in detail with reference to FIG. 6.

FIG. 6 is a schematic diagram of a system architecture according to an embodiment of this application. As shown in FIG. 6, the system architecture 500 includes an execution device 510, a training device 520, a database 530, a client device 540, a data storage system 550, and a data collection system 560.

The execution device 510 includes a calculation module 511, an I/O interface 512, a preprocessing module 513, and a preprocessing module 514. The calculation module 511 may include a target model/rule 501, and the preprocessing module 513 and the preprocessing module 514 are optional.

The execution device 510 may be the foregoing terminal device or server that runs the circuit design application.

The data collection device 560 is configured to collect a training sample. The training sample may be information about an I/O unit, information about a bump, a total quantity of connections, or the like. After collecting the training sample, the data collection device 560 stores the training sample in the database 530.

The training device 520 may maintain the training sample in the database 530, and trains a to-be-trained neural network (for example, a machine learning model in embodiments of this application), to obtain the target model/rule 501.

It should be noted that in actual application, the training sample maintained in the database 530 is not necessarily collected by the data collection device 560, and may be received from another device. In addition, it should be noted that the training device 520 does not necessarily completely train the target model/rule 501 based on the training sample maintained in the database 530, and may perform model training by obtaining a training sample from a cloud or another location. The foregoing descriptions should not be construed as a limitation on embodiments of this application.

The target model/rule 501 obtained through training by the training device 520 may be applied to different systems or devices, for example, applied to the execution device 510 shown in FIG. 6. The execution device 510 may be a terminal, for example, a mobile phone terminal, a tablet computer, a notebook computer, an augmented reality (augmented reality, AR)/virtual reality (virtual reality, VR) device, or a vehicle-mounted terminal, may be a server, or the like.

Specifically, the training device 520 may transfer a trained model to the execution device 510.

In FIG. 6, the input/output (input/output, I/O) interface 512 is configured in the execution device 510, and is configured to exchange data with an external device. A user may enter data (for example, first information of the I/O unit and second information of the bump in embodiments of this application) to the I/O interface 512 by using the client device 540.

The preprocessing module 513 and the preprocessing module 514 are configured to perform preprocessing based on the input data received by the I/O interface 512. It should be understood that the preprocessing module 513 and the preprocessing module 514 may not exist, or there may be only one preprocessing module. When the preprocessing module 513 and the preprocessing module 514 do not exist, the calculation module 511 may be directly used to process the input data.

When the execution device 510 preprocesses the input data, or when the calculation module 511 in the execution device 510 performs a related processing process, for example, calculation, the execution device 510 may invoke data, code, and the like in the data storage system 550 for corresponding processing, or may store data, instructions, and the like obtained through corresponding processing in the data storage system 550.

Finally, the I/O interface 512 provides a processing result (for example, a target connection path in embodiments of this application) for the client device 540, to provide the processing result for the user.

In the case shown in FIG. 6, the user may manually provide the input data, and the "manually providing the input data" may be implemented by performing an operation by using an interface provided by the I/O interface 512. In another case, the client device 540 may automatically send the input data to the I/O interface 512. If the client device 540 is required to automatically send the input data, authorization from the user needs to be obtained, and the user may set corresponding permission in the client device 540. The user may view, on the client device 540, a result output by the execution device 510. The result may be specifically presented in a specific manner, for example, display, sound, or an action. The client device 540 may also be used as a data collection terminal, collect the input data that is input to the I/O interface 512 and that is shown in the figure and the output result output from the I/O interface 512, use the input data and the output result as new sample data, and store the new sample data in the database 530. Certainly, alternatively, the client device 540 may not perform collection, and the I/O interface 512 directly uses the input data that is input to the I/O interface 512 and that is shown in the figure and the output result output from the I/O interface 512 as new sample data, and stores the new sample data in the database 530.

It should be noted that FIG. 6 is merely a schematic diagram of a system architecture according to an embodiment of this application. A locational relationship between devices, components, modules, and the like shown in the figure does not constitute any limitation. For example, in FIG. 6, the data storage system 550 is an external memory with respect to the execution device 510. In another case, the data storage system 550 may be disposed in the execution device 510. It should be understood that the execution device 510 may be deployed in the client device 540.

Details from a perspective of model inference are as follows:

In embodiments of this application, the calculation module 511 in the execution device 520 may obtain the code stored in the data storage system 550, to implement the circuit wiring determining method in embodiments of this application.

In embodiments of this application, the calculation module 511 in the execution device 520 may include a hardware circuit (for example, an application-specific integrated circuit (application-specific integrated circuit, ASIC), a field programmable gate array (field programmable gate array, FPGA), a general-purpose processor, a digital signal processor (digital signal processing, DSP), a microprocessor, or a microcontroller), or a combination of these hardware circuits. For example, the training device 520 may be a hardware system having an instruction execution function, for example, a CPU or a DSP, a hardware system having no instruction execution function, for example, an ASIC or an FPGA, or a combination of the foregoing hardware system having no instruction execution function and the foregoing hardware system having an instruction execution function.

Specifically, the calculation module 511 in the execution device 520 may be a hardware system having an instruction execution function. A connection relationship prediction method provided in embodiments of this application may be software code stored in a memory. The calculation module 511 in the execution device 520 may obtain the software code from the memory, and execute the obtained software code to implement the circuit wiring determining method provided in embodiments of this application.

It should be understood that the calculation module 511 in the execution device 520 may be a combination of a hardware system having no instruction execution function and a hardware system having an instruction execution function. Some steps of the circuit wiring determining method provided in embodiments of this application may alternatively be implemented by using the hardware system that is in the calculation module 511 in the execution device 520 and that has no instruction execution function. This is not limited herein.

Details from a perspective of model training are as follows.

In embodiments of this application, the training device 520 may obtain code stored in a memory (not shown in FIG. 6, and may be integrated into the training device 520 or separately deployed from the training device 520), to implement the circuit wiring determining method in embodiments of this application.

In embodiments of this application, the training device 520 may include a hardware circuit (for example, an application-specific integrated circuit (application-specific integrated circuit, ASIC), a field programmable gate array (field programmable gate array, FPGA), a general-purpose processor, a digital signal processor (digital signal processing, DSP), a microprocessor, or a microcontroller), or a combination of these hardware circuits. For example, the training device 520 may be a hardware system having an instruction execution function, for example, a CPU or a DSP, a hardware system having no instruction execution function, for example, an ASIC or an FPGA, or a combination of the foregoing hardware system having no instruction execution function and the foregoing hardware system having an instruction execution function.

It should be understood that the training device 520 may be the combination of the hardware system having no instruction execution function and the hardware system having the instruction execution function. Some steps that are of the circuit wiring determining method provided in embodiments of this application and that are related to model training may alternatively be implemented by the hardware system, in the training device 520, having no instruction execution function. This is not limited herein.

2. Cloud service provided by the server

In a possible implementation, the server may provide a circuit wiring determining service for a terminal side through an application programming interface (application programming interface, API).

A terminal device may send a related parameter (for example, information about an I/O unit or information about a bump) to the server through an API provided by a cloud. The server may obtain a processing result based on the received parameter, and return the processing result (for example, a target connection path) to the terminal.

For descriptions about the terminal and the server, refer to the descriptions in the foregoing embodiments. Details are not described herein again.

Embodiments of this application relate to massive application of a neural network. Therefore, for ease of understanding, the following first describes terms and concepts related to the neural network in embodiments of this application.

(1) Neural network

The neural network may include a neuron. The neuron may be an operation unit that uses xs (namely, input data) and an intercept of 1 as an input. An output of the operation unit may be as follows:

$$h_{W,b}(x) = f(W^T x) = f\left(\sum_{s=1}^{n} W_s x_s + b\right).$$

Herein, s=1, 2, ..., and n, n is a natural number greater than 1, Ws is a weight of xs, b is a bias of the neuron, and f is an activation function (activation functions) of the neural unit, and is used to introduce a non-linear characteristic into the neural network, to convert an input signal in the neuron into an output signal. The output signal of the activation function may be used as an input of a next convolutional layer, and the activation function may be a sigmoid function. The neural network is a network constituted by linking a plurality of the foregoing individual neurons together. To be specific, an output of one neuron may be an input of another neuron. An input of each neuron may be connected to a local receptive field of a previous layer to extract a feature of the local receptive field. The local receptive field may be a region including several neurons.

(2) Deep neural network

The deep neural network (Deep Neural Network, DNN), also referred to as a multi-layer neural network, may be understood as a neural network having many hidden layers. The "many" herein does not have a special measurement standard. The DNN is divided based on locations of different layers, and a neural network in the DNN may be divided into three types: an input layer, a hidden layer, and an output layer. Generally, the first layer is the input layer, the last layer is the output layer, and the middle layer is the hidden layer. Layers are fully connected. To be specific, any neuron at an $i^{th}$ layer is necessarily connected to any neuron at an $(i+1)^{th}$ layer. Although the DNN seems complex, it is not complex in terms of work at each layer. Simply speaking, the DNN is the following linear relationship expression: $\vec{y} = \alpha(W\vec{x} + \vec{b})$, where $\vec{x}$ is an input vector, $\vec{y}$ is an output vector, $\vec{b}$ is an offset vector, W is a weight matrix (also referred to as a coefficient), and $\alpha()$ is an activation function. In each layer, an output vector $\vec{y}$ is obtained from an input vector $\vec{x}$ through such a simple operation. Because the DNN has the plurality of layers, there are also a plurality of coefficients W and bias vectors $\vec{b}$. Definitions of these parameters in the DNN are as follows: The coefficient W is used as an example. It is assumed that in a DNN having three layers, a linear coefficient from the $4^{th}$ neuron at a second layer to the $2^{nd}$ neuron at a third layer is defined as $W_{24}^3$. The superscript 3 indicates a layer at which the coefficient W is located, and the subscript corresponds to the output index 2 of the third layer and the input index 4 of the second layer. In conclusion, a coefficient from the $k^{th}$ neuron at the $(L-1)^{th}$ layer to the $j^{th}$ neuron at the $L^{th}$ layer is defined as $W_{jk}^L$. It should be noted that there is no parameter W at the input layer. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors W at many layers).

(3) Graph (Graph)

The graph is a data structure that includes at least one vertex and at least one edge. In some scenarios, the vertex on the graph may be mapped to an entity, and the edge on the graph may be mapped to a relationship between entities. The graph may be a directed graph or an undirected graph. Certainly, the graph may further include other data other than the vertex and the edge, such as a label of the vertex and a label of the edge. In an example scenario, in a friend recommendation scenario, each vertex on the graph may represent one user, each edge on the graph may represent a social relationship between different users, and data of each vertex on the graph is portrait data of the user and behavior data of the user, for example, an age, a career, a hobby, and an education background of the user. For another example, in a commodity recommendation scenario, each vertex on the graph may represent one user or one commodity, and each edge on the graph may represent an interaction relationship between the user and the commodity, such as a purchase relationship or a collection relationship. For another example, in a financial risk control scenario, each vertex on the graph may represent an account, a transaction, or funds. The edge on the graph may represent a flow relationship of funds, for example, a loop on the graph may represent circular transfer. For another example, in a scenario of determining a connection relationship between network elements in a network system, each vertex on the graph may represent one network element, for example, a router, a switch, or a terminal, and each edge on the graph may represent a connection relationship between different network elements.

(4) Graph neural network (graph neural network, GNN)

The GNN is a deep learning method with structural information, and can be used to calculate a current status of a node. Information about the graph neural network is transferred based on a given graph structure, and a status of each node may be updated based on an adjacent node. Specifically, the graph neural network may transfer information about all adjacent nodes to a current node based on a structure graph of the current node and by using a neural network as an aggregation function of the node information, and update a status of the current node accordingly. An output of the graph neural network is statuses of all nodes.

(5) Loss function

In a process of training the deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the target value that is actually expected or a value that is very close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible.

(6) Back propagation algorithm

The convolutional neural network may correct a value of a parameter in an initial super-resolution model in a training process according to an error back propagation (back propagation, BP) algorithm, so that an error loss of reconstructing the super-resolution model becomes smaller. Specifically, an input signal is transferred forward until an error loss occurs at an output, and the parameter in the initial super-resolution model is updated based on back propagation error loss information, to make the error loss converge. The back propagation algorithm is an error-loss-centered back propagation motion intended to obtain a parameter, such as a weight matrix, of an optimal super-resolution model.

(7) Port

The port is an edge of a circuit (for example, a chip), and is configured to serve as an interface for communication or energy transfer with a peripheral circuit.

(8) Pin

The pin is a pin having a specific function in a circuit, and the pin is a segment at an end of a lead. The segment and a pad on a circuit board form a solder joint through soft soldering.

(9) Relay point

In a circuit, a bare board area including no solder joint exists between adjacent pins. The relay point is a logical point defined in the bare board area, and the relay point is a point on a connection path between a port and a pin.

(10) I/O unit

The I/O unit may be located in an edge area of a circuit (for example, a chip), the I/O unit may be responsible for connecting to an external element, and the I/O unit may be used as a port for performing functions such as data exchange and energy transfer with the external element.

(11) Bump

A transfer unit (bump) may also be referred to as a wafer, a bump, or a protrusion, and is located in an internal area of a circuit (for example, a chip), and the bump may be connected to an I/O unit, and perform data exchange, energy transfer, and the like with the I/O unit.

Wiring matching between a port and a pin in a circuit, for example, wiring matching between an I/O unit and a bump, is one of important processes in chip design, is time-consuming and difficult to check, and has a great demand. Generally, wiring matching needs to be checked based on manual experience of a chip designer, and wiring matching of a corresponding pin may be manually adjusted by using interactive software. In addition, an actual quantity of connections between the I/O unit and the bump is increased to the maximum extent while meeting a multi-priority type constraint of the pin. Currently, a parsing method based on a rule construction constraint is commonly used in the industry to process a problem in automatic wiring matching of the pin of the chip, and implement an automatic wiring function based on a type of the pin of the chip and according to a predefined wiring rule. However, the parsing method based on the rule construction constraint has poor generalization, complex coupling of wiring rules, high computational complexity, and easy to get stuck in a local extremum solution, resulting in poor overall performance of circuit wiring.

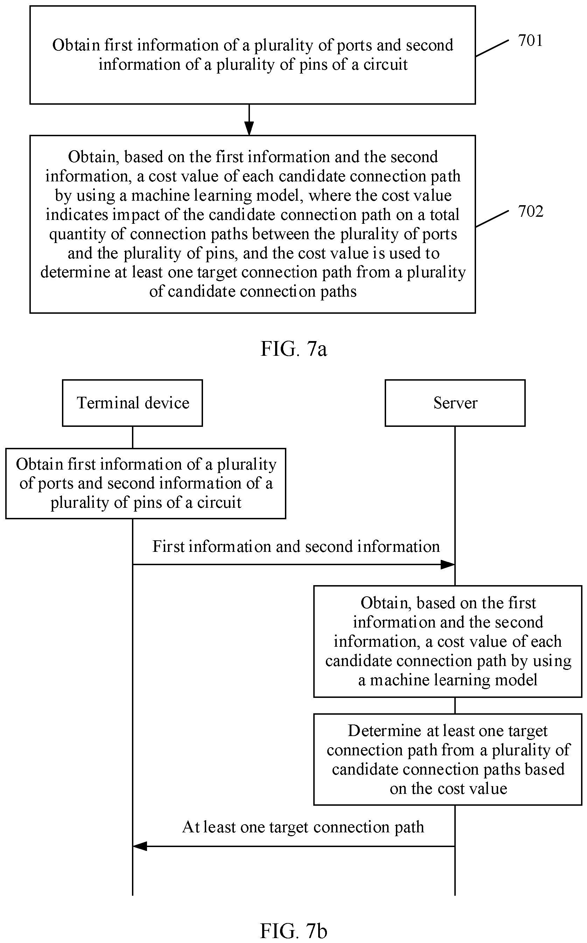

To resolve the foregoing problem, FIG. 7a is a schematic flowchart of a circuit wiring determining method according to an embodiment of this application. As shown in FIG. 7a, the circuit wiring determining method provided in embodiments of this application includes the following steps.

701: Obtain first information of a plurality of ports and second information of a plurality of pins of a circuit, where a plurality of candidate connection paths are included between the plurality of ports and the plurality of pins, and the candidate connection path is a connection path between the port and the pin.

Step 701 may be performed by a terminal device or a server. For details, refer to the descriptions in the foregoing embodiments. Details are not described herein again.

In a possible implementation, the port is an input/output I/O unit, and the pin is a transfer unit bump.

The first information of the plurality of ports may be understood as first information of each of the plurality of ports.

The second information of the plurality of pins may be understood as second information of each of the plurality of pins.

In a possible implementation, the first information may include one or more of a location feature, a function feature, or a priority feature of the port. The second information may be one or more of a location feature, a function feature, or a priority feature of the pin.

In a possible implementation, the location feature may be represented as a coordinate location of a circuit element. For example, the location feature may be a coordinate location on a 2D plane. More specifically, the location feature may be XY coordinates in a rectangular coordinate system.

For example, the first information may include a coordinate location of the port.

For example, the second information may include a coordinate location of the pin.

In a possible implementation, the function feature may represent functions implemented by the circuit element. For example, the functions may include a signal transmission function, an energy transmission function, and a grounding function.

For example, the first information may include a function implemented by the port.

For example, the second information may include a function implemented by the pin.

In a possible implementation, the priority feature may indicate an importance degree of the circuit element, and the importance degree may describe a requirement of the circuit element on a quantity of connections. A higher priority indicates a higher importance degree of the circuit element and a higher requirement of the circuit element on a quantity of connections.

In a possible implementation, circuit elements with different functions may have different priorities.

For example, a priority of a circuit element with a signal transmission function is higher than a priority of a circuit element with an energy transmission function, and the priority of the circuit element with the energy transmission function is higher than a priority of a circuit element with a grounding function.

In a possible implementation, circuit elements with different functions may have a same priority.

For example, a priority of a circuit element with a signal transmission function is higher than a priority of a circuit element with an energy transmission function, and the priority of the circuit element with the energy transmission function is the same as a priority of a circuit element with a grounding function.

In a possible implementation, circuit elements with a same function may have different priorities.

For example, priorities of some circuit elements with a grounding function may be higher than priorities of the other circuit elements with a grounding function.

In a possible implementation, information (for example, the first information in embodiments of this application) about the port and information (for example, the second information in embodiments of this application) about the pin may be input based on an interface of circuit design software (for example, EDA).

The following describes a schematic diagram of a manner of inputting the first information and the second information with reference to descriptions of the interface.

1. About the location feature

In a possible implementation, the EDA is used as an example. The circuit design software may provide an element library of a circuit element for selection. The element library may include a plurality of circuit units, for example, the port and the pin.

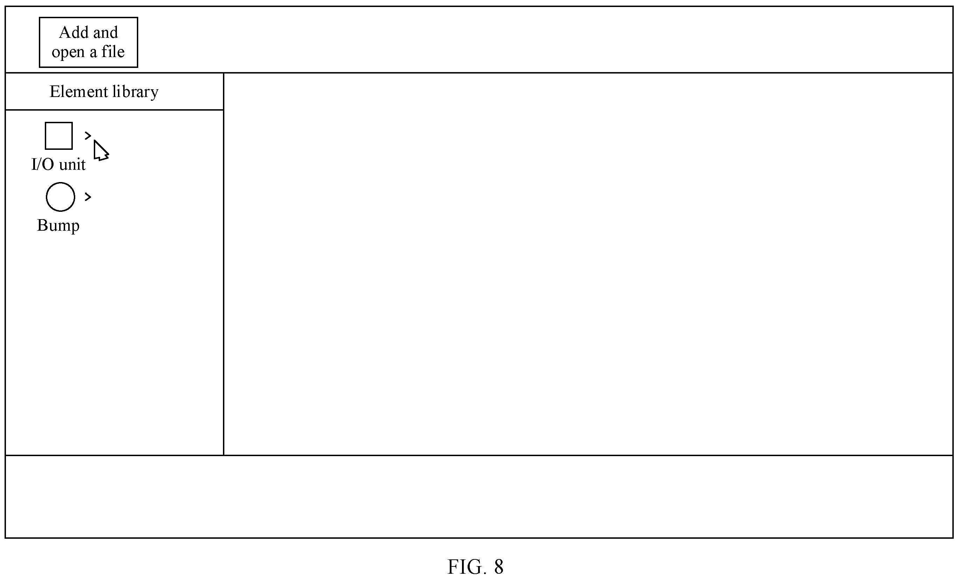

Refer to FIG. 8. A selected circuit unit may be placed in a corresponding location in the element library in a selection and dragging manner. After the port and the pin are placed in corresponding locations, the location features of the port and the pin may be obtained based on a location of the circuit element on a circuit diagram. For example, the location feature may be represented as a coordinate location of the circuit element. For example, the location feature may be a coordinate location on the 2D plane. More specifically, the location feature may be XY coordinates in the rectangular coordinate system.

Refer to FIG. 8. The first information and the second information may be input in a form of a file. The file may express information about a circuit whose wiring is to be designed. The file may include the location features of the port and the pin.

2. Function feature

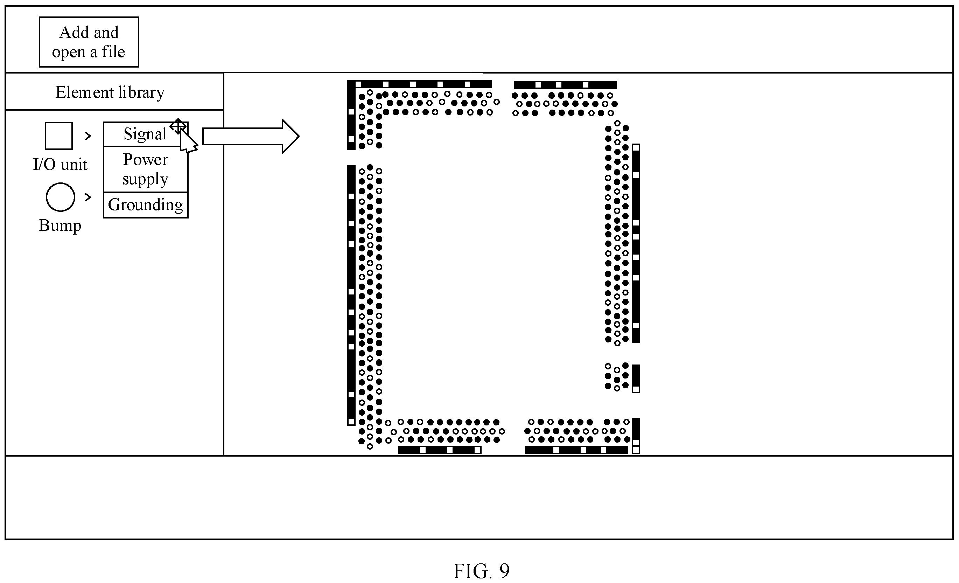

Refer to FIG. 9. A to-be-placed element and a function of the element may be selected in the element library, and the element is dragged to a corresponding location, to obtain the function features of the port and the pin.

Refer to FIG. 9. The first information and the second information may be input in a form of a file. The file may express information about a circuit whose wiring is to be designed. The file may include the function features of the port and the pin.

3. Priority feature

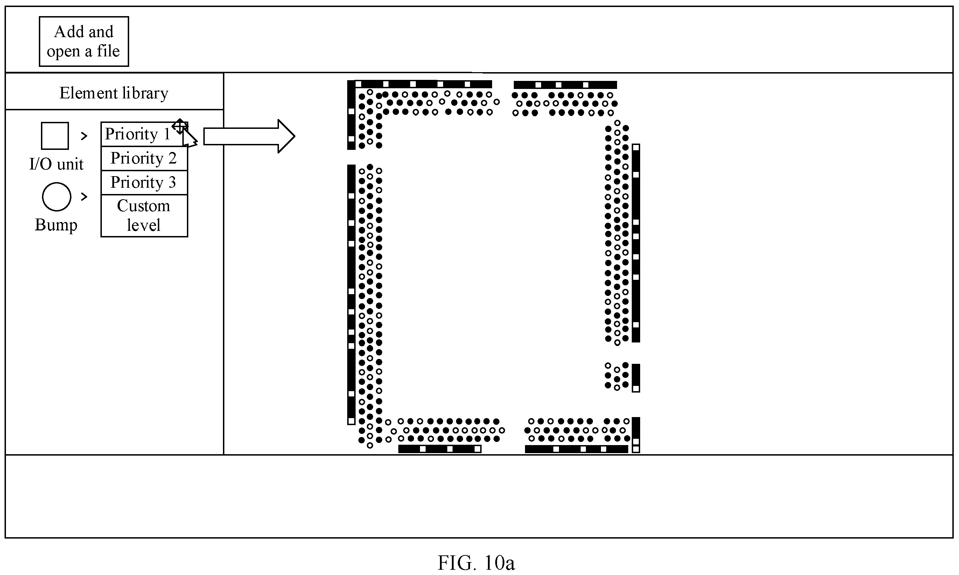

Refer to FIG. 10a. A priority (for example, a priority 1, a priority 2, and a priority 3 shown in FIG. 10a) of a circuit unit may be selected, and an element is placed in a corresponding location, to obtain the priority features of the port and the pin.

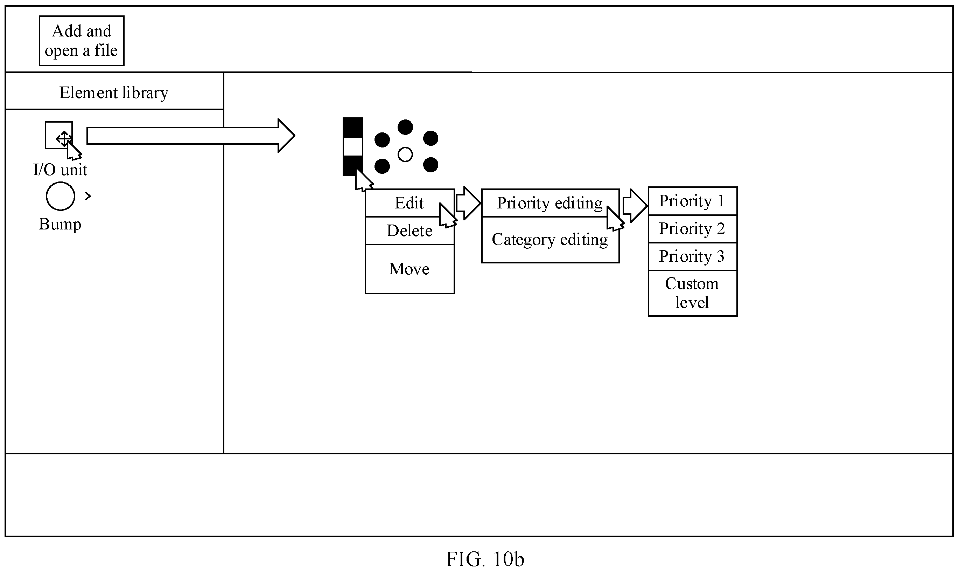

In a possible implementation, a to-be-placed element and a function of the element may be selected from the element library, and then a priority is edited after the element is dragged to a corresponding location. Refer to FIG. 10b. An editing control for the port may be selected and triggered. The control may be used to edit a priority, for example, select the priority 1, the priority 2, and the priority 3 shown in FIG. 10b.

Refer to FIG. 10a. The first information and the second information may be input in a form of a file. The file may express information about a circuit whose wiring is to be designed. The file may include the priority features of the port and the pin.

In a possible implementation, the plurality of candidate connection paths may be included between the plurality of ports and the plurality of pins, and the candidate connection path is a connection path (an available connection path) between the port and the pin.

In a possible implementation, the connection path between the port and the pin may be understood as that two ends of the candidate connection path are respectively the port and the pin, the port and the pin may be connected through the candidate connection path, and an area that the candidate connection path passes through is a blank area that does not include the port and the pin, namely, an area that is not occupied by the port and the pin.

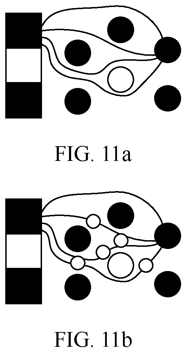

Refer to FIG. 11a. In FIG. 11a, a block indicates the port, a circular block indicates the pin, and a same color indicates a same function. As shown in FIG. 11a, one or more candidate connection paths may be included between a port and a pin of a group, that is, one port is used as a start point, and may be connected to one pin through one or more paths.

In a possible implementation, a finally determined target connection path between the port and the pin may be selected from the candidate connection paths.

The following describes how to determine at least one candidate connection path between the port and the pin.

In a possible implementation, during candidate connection path determining, a candidate connection path can be formed only between a port and a pin having a same function. The function features of the port and the pin indicated by the first information and the second information may be known to be objects that can form the candidate connection path. In other words, the port and the pin that are indicated by the first information and the second information and that have the same function may be used as a start point and an end point to form the candidate connection path.

For example, a candidate connection path may be formed between a port and a pin of a same color shown in FIG. 11a.

In a possible implementation, the first information and the second information may indicate the location features of the port and the pin. An arrangement of each port and pin may be known based on the location features, and the at least one candidate connection path may be determined based on the spatial arrangement of each port and pin.

In embodiments of this application, there may be a large quantity of candidate connection paths between the port and the pin. To reduce a subsequent calculation amount, some of the candidate connection paths may be reserved. For example, at least one candidate connection path whose quantity is less than a preset value (for example, the preset value is 3, 4, 5, 6, or 7) and whose path length is small may be selected. In addition, because a port and a pin of a same type can be connected, to reduce a subsequent calculation amount, a port and a pin that are close to each other may be selected for candidate connection path determining.

In a possible implementation, the at least one candidate connection path between the port and the pin may be implemented by interacting with a user. For example, the user may manually enter, on an interface of a circuit design application, the at least one candidate connection path between the port and the pin, or import a circuit diagram file that includes the at least one candidate connection path between the port and the pin into the circuit design application, or transmit the at least one candidate connection path between the port and the pin to a cloud server.

702: Obtain, based on the first information and the second information, a cost value of each candidate connection path by using a machine learning model, where the cost value indicates impact of the candidate connection path on a total quantity of connection paths between the plurality of ports and the plurality of pins, and the cost value is used to determine the at least one target connection path from the plurality of candidate connection paths.

In a possible implementation, step 702 may be performed by the server or the terminal device.

Specifically, from the perspective of an execution body of the steps, the following several cases may be exemplarily included.

Refer to FIG. 7b. In a possible implementation, the terminal device may obtain the first information of the plurality of ports and the second information of the plurality of pins of the circuit, and send the first information and the second information (for example, information about the plurality of candidate connection paths that may be obtained based on the first information and the second information) to the server. The server may obtain, based on the first information and the second information, the cost value of each candidate connection path by using the machine learning model, determine the at least one target connection path from the plurality of candidate connection paths, and return the at least one target connection path to the terminal device.

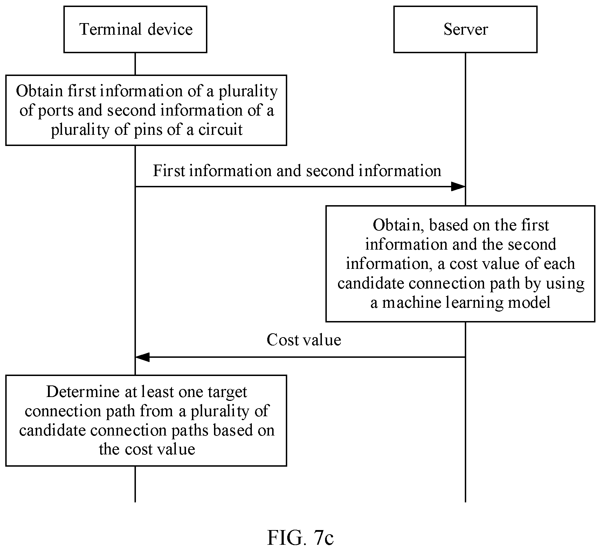

Refer to FIG. 7c. In a possible implementation, the terminal device may obtain the first information of the plurality of ports and the second information of the plurality of pins of the circuit, and send the first information and the second information (for example, information about the plurality of candidate connection paths that may be obtained based on the first information and the second information) to the server. The server may obtain, based on the first information and the second information, the cost value of each candidate connection path by using the machine learning model, and send the cost value to the terminal device. Then, the terminal device may determine the at least one target connection path from the plurality of candidate connection paths based on the cost value.

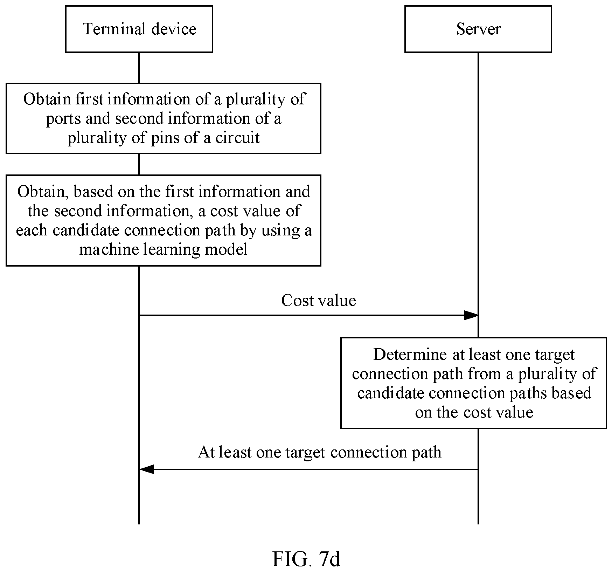

Refer to FIG. 7d. In a possible implementation, the terminal device may obtain the first information of the plurality of ports and the second information of the plurality of pins of the circuit, obtain, based on the first information and the second information (for example, information about the plurality of candidate connection paths that may be obtained based on the first information and the second information), the cost value of each candidate connection path by using the machine learning model, and send the cost value to the server. Then, the server may determine the at least one target connection path from the plurality of candidate connection paths based on the cost value, and return the at least one target connection path to the terminal device.

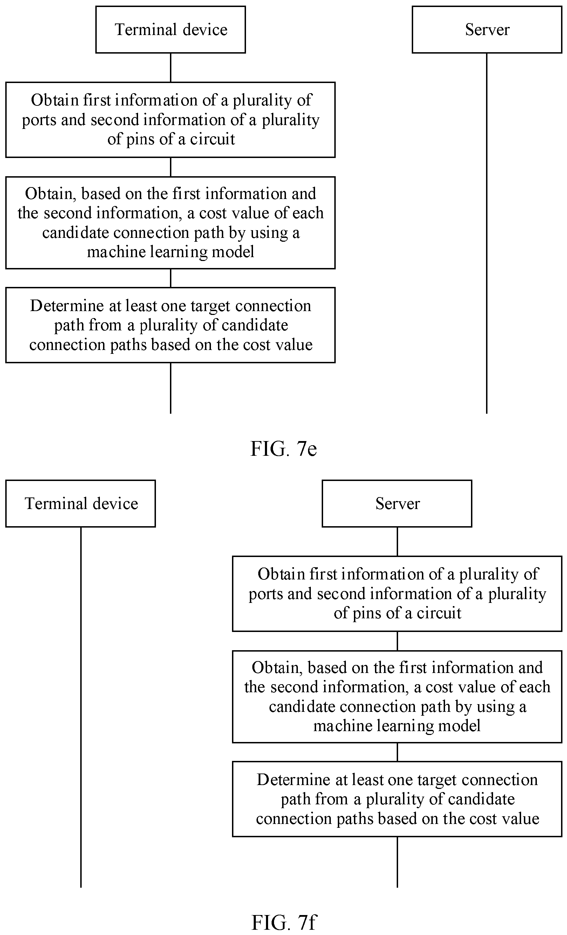

Refer to FIG. 7e. In a possible implementation, the terminal device may obtain the first information of the plurality of ports and the second information of the plurality of pins of the circuit, obtain, based on the first information and the second information (for example, information about the plurality of candidate connection paths that may be obtained based on the first information and the second information), the cost value of each candidate connection path by using the machine learning model, and determine the at least one target connection path from the plurality of candidate connection paths based on the cost value.

Refer to FIG. 7f. In a possible implementation, the server may obtain the first information of the plurality of ports and the second information of the plurality of pins of the circuit (which may be sent by the terminal device). For example, the server may obtain information about the plurality of candidate connection paths (which may be sent by the terminal device), obtain, based on the first information and the second information (for example, the information about the plurality of candidate connection paths that may be obtained based on the first information and the second information), the cost value of each candidate connection path by using the machine learning model, determine the at least one target connection path from the plurality of candidate connection paths based on the cost value, and return the at least one target connection path to the terminal device.

In a possible implementation, the candidate connection path may include the port and the pin at two ends, and at least one relay point that the candidate connection path passes through. The relay point is a middle location point between adjacent pins. Information about each candidate connection path includes: first information of the port included in the candidate connection path, second information of the pin included in the candidate connection path, and location information of the at least one relay point.

Refer to FIG. 11b. The information about the plurality of candidate connection paths may include the information about each of the plurality of candidate connection paths. Because each candidate connection path may include a start point, at least one relay point, and an end point, the information about each candidate connection path may include information about the start point, location information of the at least one relay point, and information about the end point. The start point may be a port, the information about the start point may include the first information of the port (for example, a location, a function, and a priority of the port), the end point may be a pin, and the information about the end point may include the second information of the pin (for example, a location, a function, and a priority of the port).

In a possible implementation, the candidate connection path between the port and the pin may include a start point, an end point, and at least one relay point. The start point and the end point may be a port and a pin, and the relay point may be a location point between adjacent pins. In this way, the connection path may be represented in a form of the start point, the at least one relay point, and the end point. For example, the port, the pin, and the relay point may be encoded. Each port, each pin, or each relay point may uniquely correspond to one encoding result, and a corresponding circuit unit (for example, a port, a pin, or a relay point) may be uniquely determined based on each encoding result. The candidate connection path may be represented by using a sequence of encoding results.

In a scenario of wiring matching between the port and the pin, a quantity of connections between the port and the pin needs to be increased as much as possible, to improve performance of a chip. In embodiments of this application, to increase the quantity of connections between the port and the pin, impact (namely, the cost value in embodiments of this application) of each candidate connection path on the total quantity of connection paths between the plurality of ports and the plurality of pins may be calculated, and the connection path between the port and the pin is selected based on the cost value.

The cost value indicates the impact of the candidate connection path on the total quantity of connection paths between the plurality of ports and the plurality of pins. The finally determined connection paths between the port and the pin do not intersect with each other (for example, the connection paths may be considered to intersect when there is a common relay point). Therefore, determining of each connection path may affect selection of another connection path between the port and the pin to some extent (a connection path with an overlapping path cannot be selected). The "impact" herein may be understood as: if the candidate connection path is used as a connection path between the port and the pin, positive impact or negative impact is caused to the total quantity of connection paths between the plurality of ports and the plurality of pins. The negative impact is used as an example. The cost value may indicate a degree by which the total quantity of connection paths between the plurality of ports and the plurality of pins is decreased if the candidate connection path is used as a connection path between the port and the pin.

To obtain the cost value, in a possible implementation, the cost value of each candidate connection path may be obtained, based on the first information and the second information, by using the machine learning model.

In a possible implementation, the machine learning model may have, through training, a capability of obtaining the cost value of each candidate connection path based on the information about the plurality of candidate connection paths.

The following describes an example of the machine learning model.

In a possible implementation, the machine learning model may include a feature extraction network and a task network. The machine learning model may be a graph neural network model, and the feature extraction network may be (for example) a graph embedding network. The information about the plurality of candidate connection paths may be represented by using the graph neural network model, to obtain a feature representation of each node and a feature representation of an edge. The node may correspond to the port, the pin unit, or the relay point in the candidate connection path. The edge may be a connection edge between the port and the relay point, a connection edge between relay points, a connection edge between the relay point and the pin unit, or the like. Optionally, the candidate connection path may be represented in a form of a bipartite graph, and is input into the feature extraction network in the form of the bipartite graph.

The node is used as an example. In a graph embedding representation process, a GraphSAGE method may be used for aggregation. A specific aggregation process is described as follows: aggregating adjacent nodes $N(v)$ of each node $v \in V$ to obtain an aggregation vector $h_{N(v)}$. Mean pooling is used in an aggregate function, and the aggregate function is specifically expressed as:

$$h_{N(v)} = \mathrm{mean}\big(\sigma(W h_u + b)\big), \forall u \in N(v),$$

where mean is a mean pooling function, W is an aggregation weight, b is an aggregation deviation, $h_u$ is a hidden state of a node u obtained through graph embedding, and $\sigma$ is a sigmoid activation function.

In a possible implementation, the feature representation output by the feature extraction network can include connection features (for example, a feature of a global connection arrangement) of the plurality of candidate connection paths, and the candidate connection path can obtain the coast value of each candidate connection path by using the task network.

In a possible implementation, the task network may obtain a cost value of each edge, and then may integrate the cost value of each edge included in each candidate connection path, to obtain the cost value of each candidate connection path.

For example, the task network may be a policy network $\pi_\theta$, and may use a two-layer fully connected network structure, which is referred to as a decision output layer. To accelerate training efficiency and reduce model complexity, a ReLU activation function may be used to act on a hidden layer of a fully connected decision layer. Because a decision process is multi-priority sequence decision behavior, decision processes cannot affect each other. An action corresponding to the $i^{\text{th}}$ priority is defined as $a_i$. According to a Markov decision process, an action in a current priority status is related to actions at all previous moments, and for example, may be expressed as:

$$p(a|s) = \prod_{i=1,\ldots,I} p(a_i|s_i, a_{i-1}),$$

where $p$ indicates an output corresponding to evaluation of a decision cost, namely, a cost value.

Optionally, the decision output layer of the policy network corresponds to a decision evaluation cost of an available path, and the decision evaluation cost may be limited within a range [0, 1] of a continuous domain.

The following describes the machine learning model in embodiments of this application from the perspective of model construction and training.

In a possible implementation, reinforcement learning may be used to optimize the graph neural network model, and optimization is mainly divided into two parts: constructing a graph neural network decision model, and performing a Markov decision optimization process.

The graph neural network decision model is constructed based on the graph neural network model, to implement status representation and action decision for a connection between a multi-priority port and a pin. Specifically, the graph neural network model mainly includes a graph encoding model and a policy decision model. The graph encoding model includes a node model, an edge model, and a global model. The policy decision model is a two-layer fully connected network. The node model is used to encode input node information, the edge model is used to encode input edge information, and the global model is used to encode a global node and the edge information.

In the Markov decision optimization process, a sequence decision issue between multi-priority port and pin can be converted into a Markov decision issue. Basic elements of a Markov decision include a status, an action, and a reward, which are defined as follows:

Status: Positions, types, and priorities of the port and the pin are used as a node status, an adjacent relationship between a node and an available path between the port and the pin is used as an edge status, and the two statuses are used as a decision input status.

Action: An input state is transferred to the graph neural network model, an available path cost evaluation in a current status is generated, and an evaluation value is used as a current decision action.

Reward: The decision action is transferred to a minimum cost maximum flow algorithm to generate a quantity of connections between the port and the pin, the quantity of connections is compared with a quantity of connections between the port and the pin obtained based on a rule-based method under a common policy, and a gain difference is used as the reward.

Then, under drive of triplet data, a maximum optimization target function is used as a guide, the graph neural network model is updated by using a reinforcement learning method. A specific target function is defined as follows:

$$\mathrm{argmax}_\pi \mathbb{E}_{((s_t, a_t) \sim \rho_\pi)}\big[R(s_t, a_t) + \alpha H\big(\pi(\cdot | s_t)\big)\big],$$

where

$\pi$ is a policy model parameter, $s_t$ and $a_t$ indicate an input status and a decision action at a corresponding $t$ moment, $\rho_\pi$ is an experience playback pool, $R$ is a corresponding reward function, $H$ is a policy entropy function, and $\alpha$ is an equalization factor.

In a possible implementation, a cold start sampling process may be randomly performed in an initial phase of a model training phase, and the experience playback pool $D$ is an empty set. An evaluation cost corresponding to the available path is generated in a random uniform sampling manner, and is used as a model decision output in a wiring matching task, to generate an original conversion data pair ($s_t$, $a_t$, $r_t$, $s_{t+1}$), and the conversion data pair ($s_t$, $a_t$, $r_t$, $s_{t+1}$) is stored in the experience playback pool $D$. The neural network model is randomly initialized based on a Xavier method, the target network model is constructed to stabilize a model update process, and a parameter of the target network model is updated by using a soft update mechanism.

After the cold start sampling process ends, a model training sampling process starts. A status representation $s_t$ is performed based on a current available path and node information such as the locations, the types, and the priorities of the port and pin, and is input to a policy network part in the graph neural network model, to generate a cost mean value and a variance of a to-be-connected edge. A corresponding cost evaluation value is obtained through Gaussian sampling based on the corresponding mean value and the variance, and is used as an action output $a_t$. Calculation is performed on the cost evaluation value of the corresponding available path by using the minimum cost maximum flow algorithm, to obtain the quantity of connection paths. A difference between the quantity of connection paths and the quantity of connections between the port and the pin obtained by using the original rule-based method is used as a reward signal $r_t$, and a next-phase state representation $s_{t+1}$ after a corresponding connection is obtained. Finally, the conversion data pair ($s_t$, $a_t$, $r_t$, $s_{t+1}$) is recorded in the experience replay pool $D$ to form model sampling data.

During the sampling process, the model training process is performed. Batch experience data B is obtained through sampling by using the experience replay pool $D$. A Soft Actor-Critic reinforcement learning method is used to further balance a relationship between exploration and utilization. A Q target value $\hat{y}$ is defined as follows:

$$\hat{y}(r_t, s_{t+1}, d_{t+1}) = r_t + \gamma(1 - d_{t+1})(\min_{i=1,2} Q_{\phi_{tar}}(s_{t+1}, \pi_{\theta_{tar}}(s_{t+1})) - \alpha \log \pi_\theta(\pi_{\theta_{tar}}(s_{t+1})|s_{t+1})) \quad ,$$

where

$d_{t+1}$ indicates whether an environment is in a terminated state at a $t+1$ moment, $Q_{\phi_{tar}}$ is a value target network, and $\pi_{\theta_{tar}}$ is a policy target network. Then, a value network $Q_\phi$ parameter is updated by using a mean square error loss function, which is defined as:

$$\sum_{(s_t, a_t, r_t, s_{t+1}, d_{t+1} \in B)} (Q_{\phi_i}(s_t, a_t) - \hat{y}(r_t, s_{t+1}, d_{t+1}))^2, for\ i = 1,2$$

Finally, a policy network $\pi_\theta$ parameter is updated by maximizing an objective function, which is defined as follows:

$$\sum_{(s_t \in B)} (\min_{i=1,2} Q_{\phi_i}(s_t, \pi_\theta(s_t)) - \alpha \log \pi_\theta(s_t)), for\ i = 1,2,$$

where

$\alpha$ is an exploration entropy factor, and is used to balance an update weight between exploration and utilization.

To maximize the final quantity of connections between the port and the pin as an update target, a final reward signal is simultaneously allocated as a reward obtained for making a decision on each priority. In addition, to reduce data correlation, a random experience playback manner is used. An update target and an exploration entropy value are maximized by using a reinforcement learning method, to avoid getting stuck in a local extremum solution due to pursuing of only a maximum reward, and improve model exploration efficiency and generalization performance. A parameter of the graph neural network model is optimized in the foregoing update manner.

In this application, a wiring decision model is matched based on the graph neural network that has performed reinforcement learning, and factors such as locations, types, and priorities corresponding to all ports and pins may be considered. In addition, a problem of difficulty in representing a high-dimensional space status can be resolved by using the graph neural network model. This method is used with a minimum cost and maximum flow algorithm, to increase the quantity of connections obtained based on the rule-based method, and avoid getting stuck in the local extremum solution. In addition, the reinforcement learning method can be used to explore in solution space. This reduces human participation, and reduces difficulty of a manual design.

703: Determine the at least one target connection path from the plurality of candidate connection paths based on the cost value.

In a possible implementation, the cost value of each candidate connection path may represent that the candidate connection path is used as a connection path between the port and the pin, and the positive impact or the negative impact may be caused to the total quantity of connection paths between the plurality of ports and the plurality of pins. Further, for a port and a pin in each group, a connection path with minimum negative impact or maximum positive impact in the plurality of candidate connection paths may be selected as the target connection path.

In a possible implementation, the at least one target connection path may be determined from the plurality of candidate connection paths by using the minimum cost maximum flow algorithm (which may also be referred to as a minimum cost maximum flow algorithm).

For example, when the minimum cost maximum flow algorithm is executed, a start node $S$ and a target node $T$ may be separately constructed on two sides of the candidate connection path, and are connected to a node corresponding to another port, a node corresponding to another pin, or a node corresponding to another relay point. A quantity $|V| = 2 + (|I| + |B| + |R|)$ of all nodes is determined based on a wiring requirement, where $|I|$ is a quantity of ports, $|B|$ is a quantity of pins, and $|R|$ is a quantity of relay points. Because a quantity of edges depends on whether the edges cross with a connection path of a previous priority to affect the current available path, the quantity of edges varies with different priorities, and a total capacity of the edges is a sum of connection requirements of the pins.

In a possible implementation, any two target connection paths of the at least one target connection path do not intersect with each other.

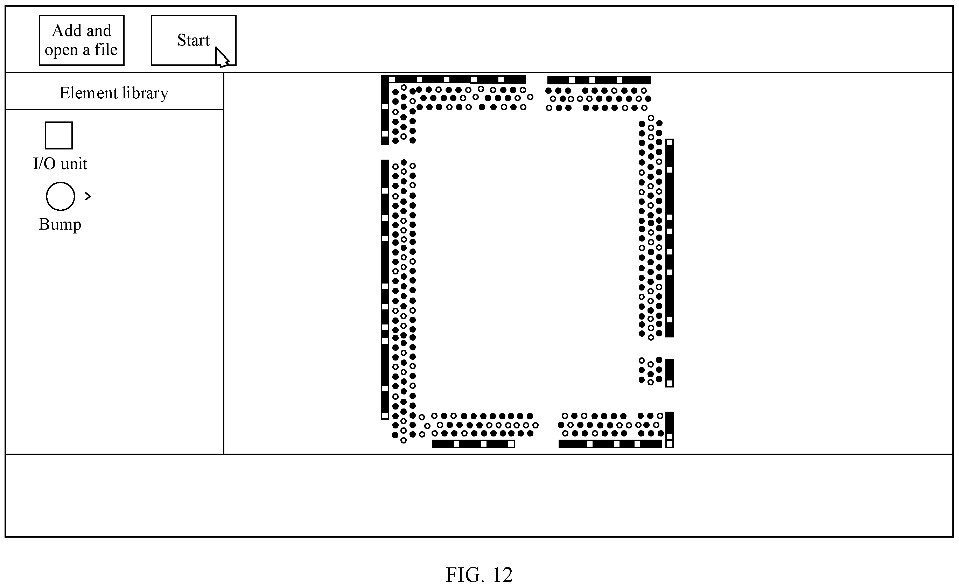

For example, FIG. 12 is a schematic diagram of the interface of the circuit design application according to an embodiment of this application. After information (for example, the first information and the second information in embodiments of this application) about the port and the pin is input, a control for triggering a wiring design operation may be tapped on the interface, to trigger the circuit design application to perform a wiring matching process of the port and the pin.

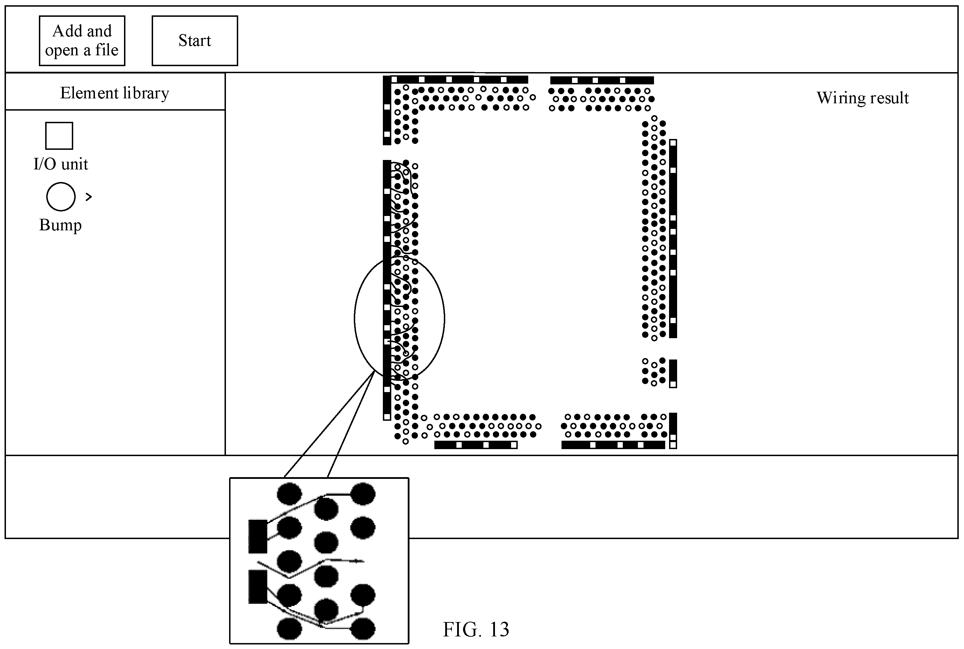

For example, FIG. 13 is a schematic diagram of an interface of the circuit design application according to an embodiment of this application. After determining the at least one target connection path from the plurality of candidate connection paths, the circuit design application may display the at least one target connection path in a form of a circuit diagram.

In a possible implementation, in a scenario of wiring matching of the port and the pin, importance of ports and pins with different functions is different. For some ports and pins with more important functions, more connections are required to ensure performance of the chip. For some ports and pins with relatively important functions, a decrease in a quantity of connections greatly affects performance of the chip (compared with ports and pins with less importance). For some ports and pins with unimportant functions, a decrease in a quantity of connections does not affect performance of the chip. In embodiments of this application, the importance may be described as a priority.

Because there are a plurality of priorities, if wiring matching is performed on ports and pins of all priorities at a time, complexity and calculation difficulty of running the machine learning model are greatly increased, it is difficult to ensure calculation precision of wiring, and a good wiring matching result cannot be obtained. In embodiments of this application, wiring calculation is separately performed on ports and pins of all the priorities based on the priorities, so that precision of wiring calculation can be improved.

For ease of description, in embodiments of this application, an example in which the plurality of priorities include a priority 1 and a priority 2 is used for description.

For example, the priority 1 may be a port and a pin having a signal transmission function, and the priority 2 may be a port and a pin having an energy transmission function.

For example, the priority 1 may be a port and a pin having a signal transmission function, and the priority 2 may be a port and a pin having a grounding function.

For example, the priority 1 may be a port and a pin having an energy transmission function, and the priority 2 may be a port and a pin having a grounding function.

For example, the priority 1 may be some ports and pins having a grounding function, and the priority 2 may be some ports and pins having a grounding function.

In a possible implementation, the first information indicates that importance of the first port is higher than importance of the second port; or the second information indicates that importance of the first pin is higher than importance of the second pin.

In a possible implementation, the plurality of ports may include a plurality of first ports and a plurality of second ports, and the plurality of pins include a plurality of first pins and a plurality of second pins. The plurality of first ports and the plurality of first pins are configured to implement a first function, the plurality of second ports and the plurality of second pins are configured to implement a second function, and the first function is different from the second function. Priorities of the plurality of first ports and the plurality of first pins are the priority 1, priorities of the plurality of second ports and the plurality of second pins are the priority 2, and the first function and the second function may be a same function or different functions.

In a possible implementation, the plurality of candidate connection paths may include a plurality of first candidate connection paths formed between the plurality of first ports and the plurality of first pins and a plurality of second candidate connection paths formed between the plurality of second ports and the plurality of second pins.

In a possible implementation, to avoid a cross conflict with a high-priority wiring path, a low-priority path (namely, an intersecting path) crossed with the high-priority candidate connection path may be removed. Even if the path is not removed, the path is not used as a final connection path. Therefore, in embodiments of this application, the low-priority path crossed with the high-priority candidate connection path is removed. This reduces a size of the solution space, ensures accuracy of wiring calculation, and reduces calculation complexity.

In a possible implementation, at least one second candidate connection path may intersect with at least one first candidate connection path of the plurality of first candidate connection paths. That is, when a model input is determined, the low-priority path crossed with the high-priority path is not removed. In the foregoing manner, an amount of input information may be increased, that is, information input into the model may describe features of the port and the pin more comprehensively, so that a more accurate cost value can be obtained.

For example, high-priority paths are the plurality of first candidate connection paths, and low-priority paths are the plurality of second candidate connection paths. At least two of the plurality of first candidate connection paths may intersect with each other (or may not overlap at all), each second candidate connection path does not intersect the plurality of first candidate connection paths, and at least two second candidate connection paths of the plurality of second candidate connection paths may intersect with each other (or may not overlap at all).

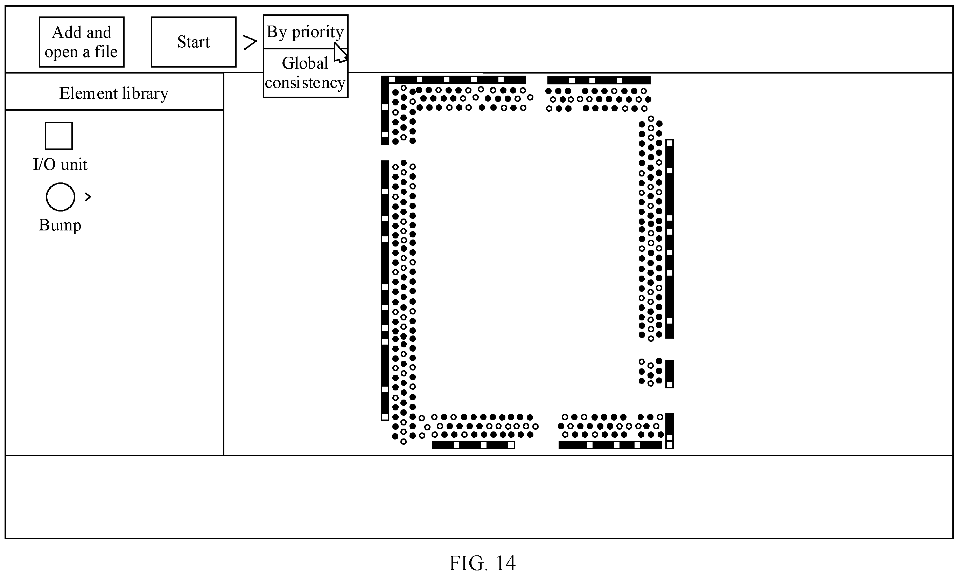

For example, FIG. 14 is a schematic diagram of an interface of the circuit design application according to an embodiment of this application. After information (for example, the first information and the second information in embodiments of this application) about the port and the pin is input, a control for triggering a priority-based wiring design function may be tapped on the interface, to trigger the circuit design application to perform a wiring matching process of the port and the pin.

In a possible implementation, wiring matching may be performed on a plurality of high-priority ports and the plurality of first pins, and after a wiring matching result is obtained, wiring matching is performed on a plurality of low-priority second ports and the plurality of second pins. Details are described in the following.

In a possible implementation, when wiring matching is performed on the plurality of high-priority ports and the plurality of first pins, a cost value of each first candidate connection path may be obtained, based on information about the plurality of first candidate connection paths and information about the plurality of second candidate connection paths, by using a machine learning model. The cost value of each first candidate connection path may be used to select target connection paths between the plurality of ports and the plurality of first pins.

Specifically, the at least one target connection path may be determined from the plurality of first candidate connection paths based on the cost value of each first candidate connection path. For how to determine the at least one target connection path from the plurality of first candidate connection paths based on the cost value of each first candidate connection path, refer to the descriptions in the foregoing embodiments. Details are not described herein again.

In a possible implementation, the plurality of first candidate connection paths may be obtained by automatically determining by the system and modifying (for example, screening or modifying) by the user. Specifically, the system may obtain and output the plurality of first initial candidate connection paths formed between the plurality of first ports and the plurality of first pins. The user may modify the plurality of first initial candidate connection paths. Correspondingly, the system may receive a modification instruction for the plurality of first initial candidate connection paths, and obtain the plurality of first candidate connection paths based on the modification instruction for the plurality of first initial candidate connection paths.

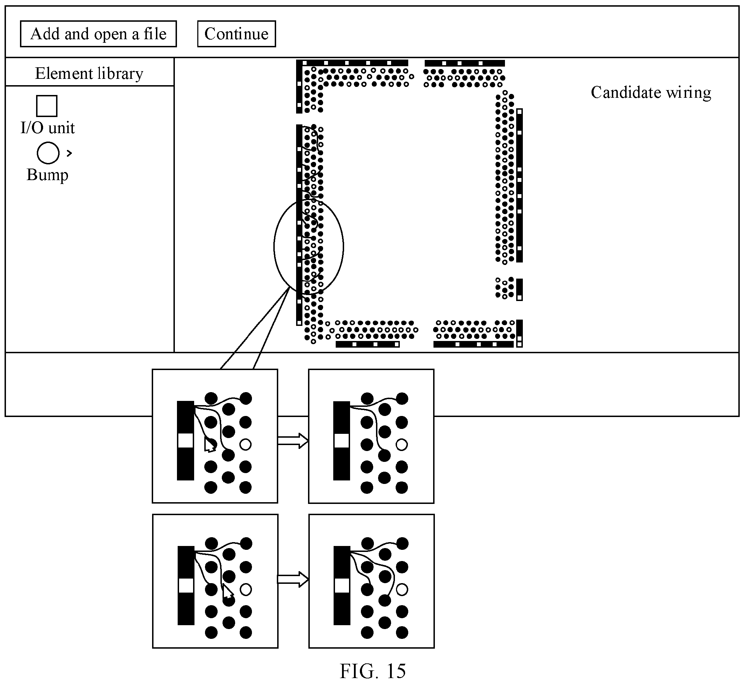

For example, FIG. 15 is a schematic diagram of an interface of the circuit design application according to an embodiment of this application. The user may delete or modify the plurality of first initial candidate connection paths.

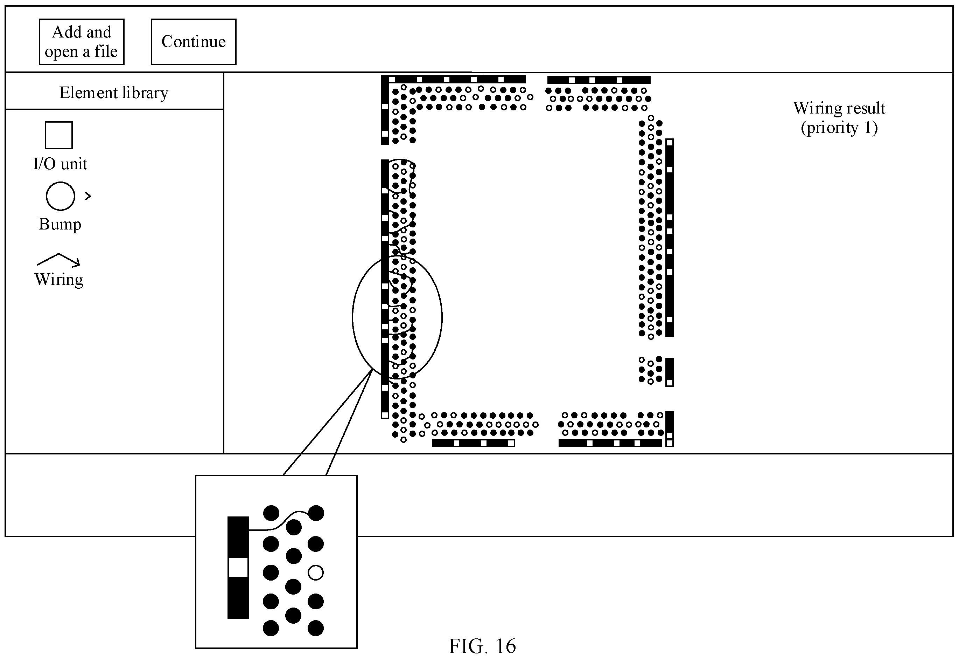

For example, FIG. 16 is a schematic diagram of the interface of the circuit design application according to an embodiment of this application. After determining the at least one first target connection path from the plurality of first candidate connection paths, the circuit design application may display the at least one first target connection path in a form of a circuit diagram.

In a possible implementation, after the system outputs the at least one first target connection path, the user may modify the at least one first target connection path based on a requirement of the user, so that the system may receive modification information of the at least one first target connection path, and obtain a modified at least one first target connection path based on the modification information of the at least one first target connection path.

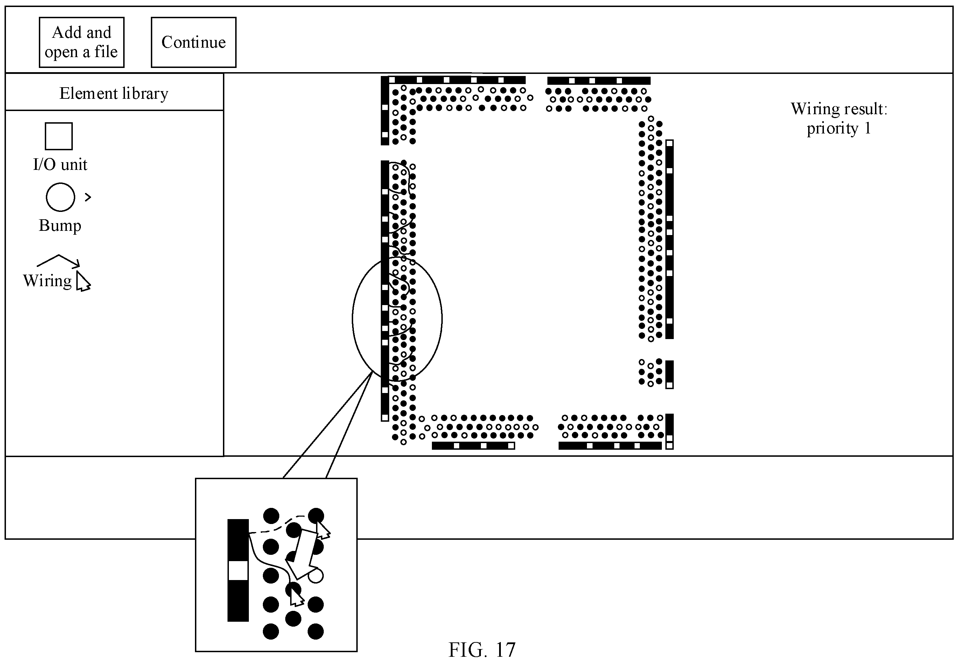

For example, FIG. 17 is a schematic diagram of an interface of the circuit design application according to an embodiment of this application. The user may modify the plurality of first target connection paths.

In a possible implementation, after a high-priority wiring matching operation is performed, a low-priority wiring matching operation may be performed based on a high-priority wiring matching result. Specifically, a cost value of each second candidate connection path may be obtained based on information about the at least one first target connection path and the information about the plurality of second candidate connection paths by using the machine learning model, and the at least one second target connection path is determined from the plurality of second candidate connection paths based on the cost value of each second candidate connection path.

In embodiments of this application, the information about the at least one first target connection path and the information about the plurality of second candidate connection paths may be used as an input of the machine learning model. Because a first candidate connection path, other than the at least one first target connection path, in the plurality of first candidate connection paths is no longer used as a connection path between the first port and the first pin, the first candidate connection path, other than the at least one first target connection path, in the plurality of first candidate connection paths may not be used as an input of the machine learning model. In this way, operation complexity can be reduced while ensuring wiring determining precision.

In a possible implementation, when a second-priority connection path is determined, a path (at least one third candidate connection path) that intersects with the first candidate connection path, other than the at least one first target connection path, in the plurality of first candidate connection paths may be used as an input of the model, to increase an amount of input information. In other words, the information input into the model may more comprehensively describe the features of the port and the pin, so that a more accurate cost value can be obtained.

In a possible implementation, to ensure that any two finally determined connection paths with a same priority do not intersect with each other, a constraint may be set when the connection paths are determined. The constraint may specify that any two connection paths with a same priority do not intersect with each other.

In a possible implementation, to ensure that any two finally determined connection paths with different priorities do not intersect with each other, a constraint may be set when the connection paths are determined. The constraint may specify that any two connection paths with different priorities do not intersect with each other. For example, after the at least one first target connection path is determined, a constraint is set when the second target connection path is selected from the plurality of second candidate connection paths. The constraint may specify that any connection path of the second target connection path does not intersect with the at least one first target connection path.

In a possible implementation, to ensure that any two finally determined connection paths with different priorities do not intersect with each other, a constraint may be set during candidate connection path selection. The constraint may specify that the candidate connection paths with different priorities do not intersect with each other.

In a possible implementation, the at least one second target connection path may be output.

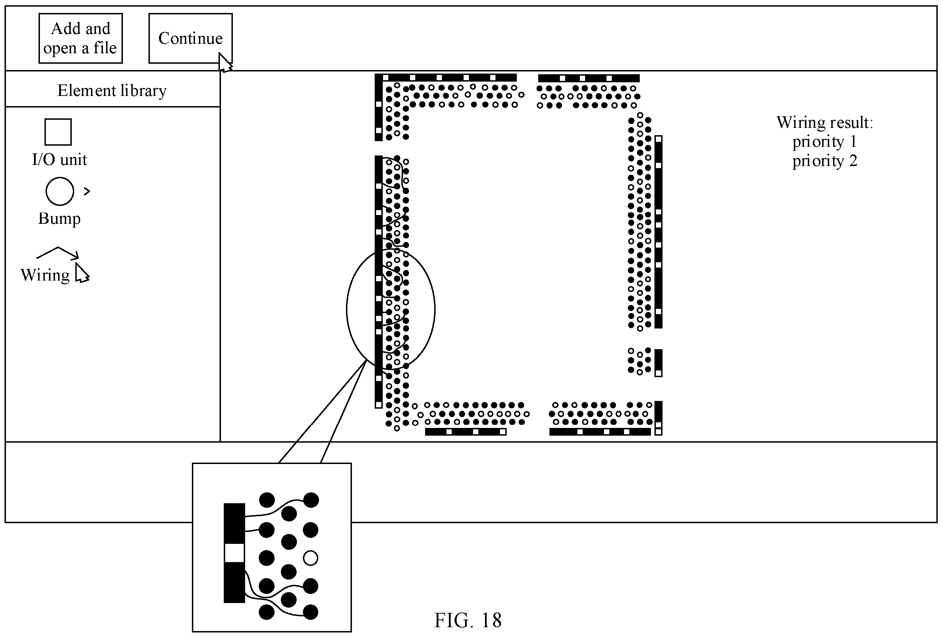

For example, FIG. 18 is a schematic diagram of the interface of the circuit design application according to an embodiment of this application. After determining the at least one second target connection path from the plurality of second candidate connection paths, the circuit design application may display the at least one second target connection path in a form of a circuit diagram.

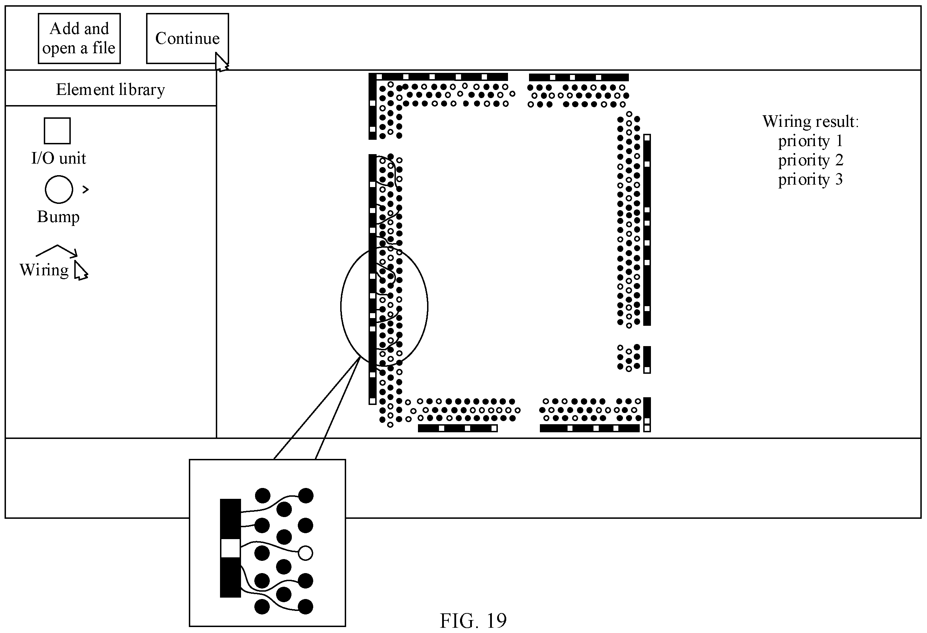

For example, FIG. 19 is a schematic diagram of an interface of the circuit design application according to an embodiment of this application. After completing path calculation for a connection path of the priority 3, the circuit design application may display the connection path of the priority 3 in a form of a circuit diagram.

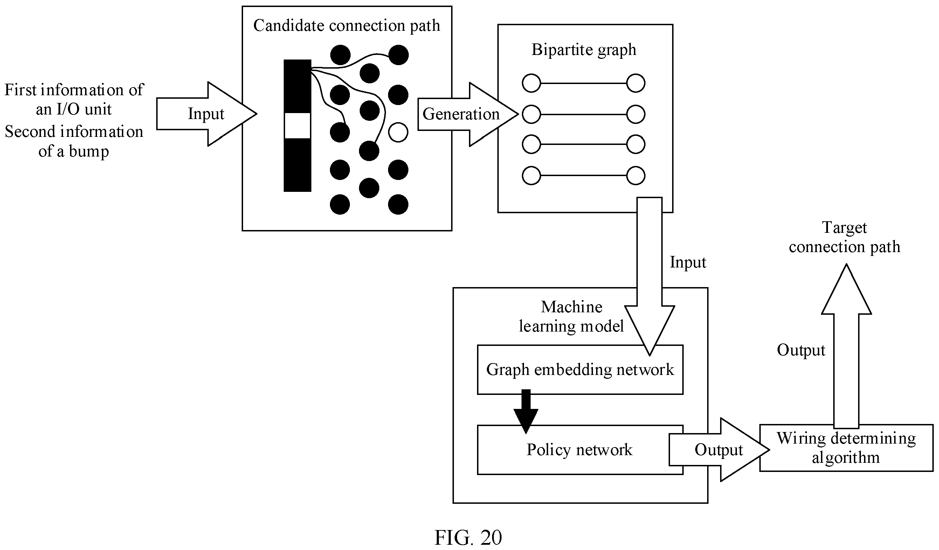

For example, the port is an I/O unit, and the pin is a bump. FIG. 20 is a schematic flowchart of a wiring determining method according to an embodiment of this application.

First information of the I/O unit and second information of the bump may be used to construct a plurality of candidate connection paths between the I/O unit and the bump, and may be represented as a bipartite graph and input into the machine learning model, for example, may be input into the graph embedding network of the machine learning model. A feature representation obtained by the graph embedding network may be input into the policy network of the machine learning model, to obtain a cost value of each candidate connection path. A target connection path may be obtained by using a wiring determining algorithm based on the cost value.

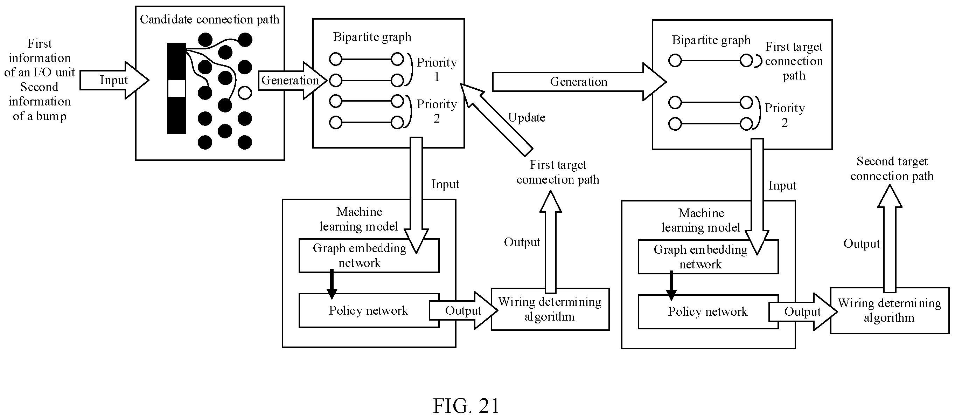

For example, the port is an I/O unit, and the pin is a bump is used. FIG. 21 is a schematic flowchart of a priority-based wiring determining method according to an embodiment of this application.

First information of the I/O unit and second information of the bump may be used to construct a plurality of candidate connection paths between the I/O unit and the bump, and may be represented as a bipartite graph and input into the machine learning model, for example, may be input into the graph embedding network of the machine learning model. A feature representation obtained by the graph embedding network may be input into the policy network of the machine learning model, to obtain a cost value of each candidate connection path of the priority 1. The first target connection path may be obtained, based on the cost value, by using a wiring determining algorithm. The bipartite graph may be updated based on the first target connection path. An updated bipartite graph may be input into the machine learning model, to obtain a cost value of each candidate connection path of the priority 2. The second target connection path may be obtained, based on the cost value, by using the wiring determining algorithm.

An embodiment of this application provides a circuit wiring determining method. The method includes: obtaining first information of a plurality of input/output ports and second information of a plurality of transfer unit pins of a circuit, where a plurality of candidate connection paths are included between the plurality of ports and the plurality of pins, and the candidate connection path is a connection path between the port and the pin; obtaining, based on the first information and the second information, a cost value of each candidate connection path by using a machine learning model, where the cost value indicates impact of the candidate connection path on a total quantity of connection paths between the plurality of ports and the plurality of pins; and determining at least one target connection path from the plurality of candidate connection paths based on the cost value. In this application, the machine learning model is used to effectively evaluate the cost value of the candidate connection path, to increase a quantity of connections between the port and the pin.

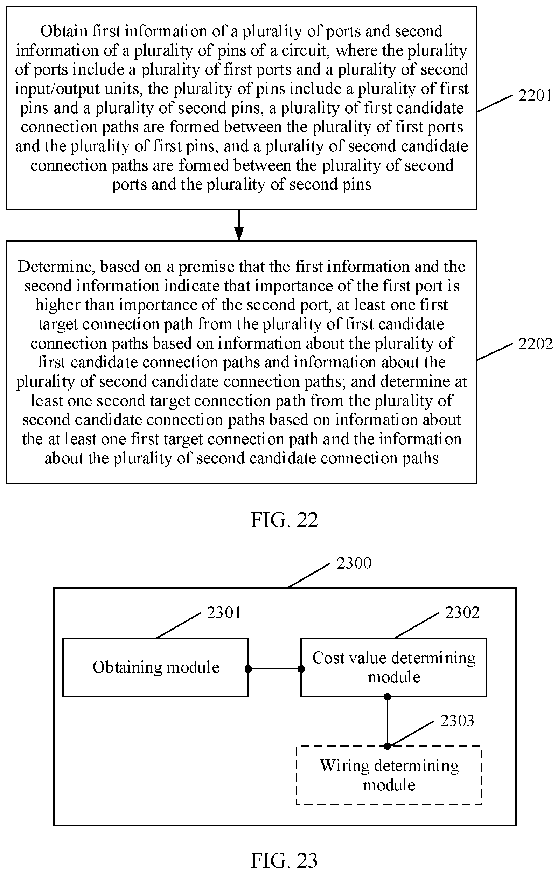

Refer to FIG. 22. An embodiment of this application further provides a circuit wiring determining method. The method includes the following steps.

2201: Obtain first information of a plurality of input/output ports and second information of a plurality of transfer unit pins of a circuit, where the plurality of ports include a plurality of first ports and a plurality of second ports, the plurality of pins include a plurality of first pins and a plurality of second pins, a plurality of first candidate connection paths are formed between the plurality of first ports and the plurality of first pins, and a plurality of second candidate connection paths are formed between the plurality of second ports and the plurality of second pins.

2202: Determine, based on a premise that the first information and the second information indicate that importance of the first port is higher than importance of the second port, at least one first target connection path from the plurality of first candidate connection paths based on information about the plurality of first candidate connection paths and information about the plurality of second candidate connection paths; and determine at least one second target connection path from the plurality of second candidate connection paths based on information about the at least one first target connection path and the information about the plurality of second candidate connection paths.

For specific descriptions of the circuit wiring determining method described in FIG. 22, refer to the descriptions of the embodiment corresponding to FIG. 7a in the foregoing embodiment. Similarities are not described again.

In a possible implementation, the port is an input/output I/O unit, and the pin is a transfer unit bump.

In a possible implementation, at least two first candidate connection paths of the plurality of first candidate connection paths intersect with each other; or

each second candidate connection path does not intersect with the plurality of first candidate connection paths; or
the at least one second candidate connection path intersects with the at least one first candidate connection path of the plurality of first candidate connection paths; or
at least two second candidate connection paths of the plurality of second candidate connection paths intersect with each other.

In a possible implementation, the method further includes:
outputting a plurality of first initial candidate connection paths formed between the plurality of first ports and the plurality of first pins, and obtaining the plurality of first candidate connection paths based on a modification instruction for at least one first initial candidate connection path of the plurality of first initial candidate connection paths.

In a possible implementation, the method further includes:
outputting the at least one first target connection path.

In a possible implementation, a first function or a second function is one of the following: signal transmission, grounding, and electric energy transmission.

In a possible implementation, the based on information about the at least one first target connection path and the information about the plurality of second candidate connection paths includes:
based on the information about the at least one first connection path and the information about the plurality of second candidate connection paths, and not based on information about a first candidate connection path, other than the at least one first target connection path, in the plurality of first candidate connection paths.

In a possible implementation, the method further includes:
outputting a plurality of second initial candidate connection paths formed between the plurality of second ports and the plurality of second pins, and obtaining a plurality of second candidate connection paths based on a modification instruction for at least one second initial candidate connection path of the plurality of second initial candidate connection paths.

In a possible implementation, the method further includes:
outputting the at least one second target connection path.

In a possible implementation, any two connection paths of the at least one first target connection path do not intersect with each other, any two connection paths of the at least one second target connection path do not intersect with each other, and each first target connection path does not intersect with any second target connection path of the at least one second target connection path.

In a possible implementation, the method further includes:
obtaining at least one modified first target connection path based on modification information of the at least one first target connection path.

The based on information about the at least one first target connection path and the information about the plurality of second candidate connection paths includes: based on information about the at least one modified first target connection path and the information about the plurality of second candidate connection paths.

FIG. 23 is a schematic diagram of a structure of a circuit wiring determining apparatus according to an embodiment of this application. The apparatus 2300 includes an obtaining module 2301 and a cost value determining module 2302.

The obtaining module 2301 is configured to obtain first information of a plurality of ports and second information of a plurality of pins of a circuit, where a plurality of candidate connection paths are included between the plurality of ports and the plurality of pins, and the candidate connection path is a connection path between the port and the pin.

For specific descriptions of the obtaining module 2301, refer to the descriptions of step 701 in the foregoing embodiment. Details are not described herein again.

The cost value determining module 2302 is configured to obtain, based on the first information and the second information, a cost value of each candidate connection path by using a machine learning model, where the cost value indicates impact of the candidate connection path on a total quantity of connection paths between the plurality of ports and the plurality of pins, and the cost value is used to determine at least one target connection path from the plurality of candidate connection paths.

For specific descriptions of the cost value determining module 2302, refer to the descriptions of step 702 in the foregoing embodiment. Details are not described herein again.

In this application, the cost value of the candidate connection path is effectively evaluated by using a machine learning model, and a preferred target connection path is determined based on the cost value, to increase the quantity of connections between the ports and the pins of an entire chip.

In a possible implementation, the port is an input/output I/O unit, and the pin is a transfer unit bump.

In a possible implementation, the apparatus further includes:

a wiring determining module 2303, configured to determine the at least one target connection path from the plurality of candidate connection paths based on the cost value; or
a sending module for the location information of the relay point, configured to send the cost value to a terminal device, where the cost value indicates the terminal device to determine the at least one target connection path from the plurality of candidate connection paths based on the cost value.

In a possible implementation, the cost value indicates negative impact of the candidate connection path on the total quantity of connection paths between the plurality of ports and the plurality of pins, the plurality of candidate connection paths include a plurality of groups of candidate connection paths, and each group of candidate connection paths of the plurality of groups of candidate connection paths corresponds to a pair of a port and a pin.

The wiring determining module 2303 is specifically configured to:

determine, from each group of candidate connection paths based on the cost value, a candidate connection path with a lowest cost value as the target connection path.

In a possible implementation, the first information further indicates at least one of the following information: a function of the port or a priority of the port.

The second information further indicates at least one of the following information: a function of the pin or a priority of the pin.

In a possible implementation, the candidate connection path includes the port and the pin at two ends and at least one relay point that the candidate connection path passes through, and the relay point is a middle location point between adjacent pins.

The based on the first information and the second information includes:

based on first information of the port included in the candidate connection path, second information of the pin included in the candidate connection path, and location information of the at least one relay point.

In a possible implementation, the plurality of ports include a plurality of first ports and a plurality of second ports, and the plurality of pins include a plurality of first pins and a plurality of second pins. The plurality of first ports and the plurality of first pins are configured to implement a first function, the plurality of second ports and the plurality of second pins are configured to implement a second function, and the first function is different from the second function.

The plurality of candidate connection paths include a plurality of first candidate connection paths formed between the plurality of first ports and the plurality of first pins and a plurality of second candidate connection paths formed between the plurality of second ports and the plurality of second pins.

The cost value determining module 2302 is specifically configured to: obtain, based on information about the plurality of first candidate connection paths and information about the plurality of second candidate connection paths, a cost value of each first candidate connection path by using the machine learning model.

The wiring determining module 2303 is specifically configured to: determine at least one first target connection path from the plurality of first candidate connection paths based on the cost value of each first candidate connection path.

In a possible implementation, at least two first candidate connection paths of the plurality of first candidate connection paths intersect with each other; or

each second candidate connection path does not intersect with the plurality of first candidate connection paths; or
the at least one second candidate connection path intersects with the at least one first candidate connection path of the plurality of first candidate connection paths; or

at least two second candidate connection paths of the plurality of second candidate connection paths intersect with each other.

In a possible implementation, the apparatus further includes:

an output module, configured to: output a plurality of first initial candidate connection paths formed between the plurality of first ports and the plurality of first pins, and obtain the plurality of first candidate connection paths based on a modification instruction for at least one first initial candidate connection path of the plurality of first initial candidate connection paths.

In a possible implementation, the apparatus further includes:

an output module for the location information of the relay point, configured to output the at least one first target connection path.

In a possible implementation, a first function or a second function is one of the following: signal transmission, grounding, and electric energy transmission.

In a possible implementation, the cost value determining module 2302 is further configured to: obtain, based on information about the at least one first target connection path and the information about the plurality of second candidate connection paths, a cost value of each second candidate connection path by using the machine learning model.

The wiring determining module 2303 is further configured to: determine at least one second target connection path from the plurality of second candidate connection paths based on the cost value of each second candidate connection path.

In a possible implementation, when the cost value of each second candidate connection path is obtained by using the machine learning model, a first candidate connection path, other than the at least one first target connection path, in the plurality of first candidate connection paths is not used as an input of the machine learning model.

In a possible implementation, the plurality of candidate connection paths further include at least one third candidate connection path formed between the plurality of second ports and the plurality of second pins, and the cost value determining module 2302 is specifically configured to:

be based on the information about the at least one first target connection path, the information about the plurality of second candidate connection paths, and information about the at least one third candidate connection path.

In a possible implementation, the output module is further configured to:

output a plurality of second initial candidate connection paths formed between the plurality of second ports and the plurality of second pins, and obtain the plurality of second candidate connection paths based on a modification instruction for the plurality of second initial candidate connection paths.

In a possible implementation, the output module is further configured to:

output the at least one second target connection path.

In a possible implementation, any two target connection paths of the at least one target connection path do not intersect with each other.

In a possible implementation, the obtaining module 2301 is further configured to:

obtain at least one modified first target connection path based on modification information of the at least one first target connection path.

The based on information about the at least one first target connection path and the information about the plurality of second candidate connection paths includes: based on information about the at least one modified first target connection path and the information about the plurality of second candidate connection paths.

In a possible implementation, the first information indicates that a priority of the first port is higher than a priority of the second port; or the second information indicates that a priority of the first pin is higher than a priority of the second pin.

In a possible implementation, the wiring determining module 2303 is specifically configured to:

determine, based on the cost value, the at least one target connection path from the plurality of candidate connection paths by using a minimum cost maximum flow algorithm.

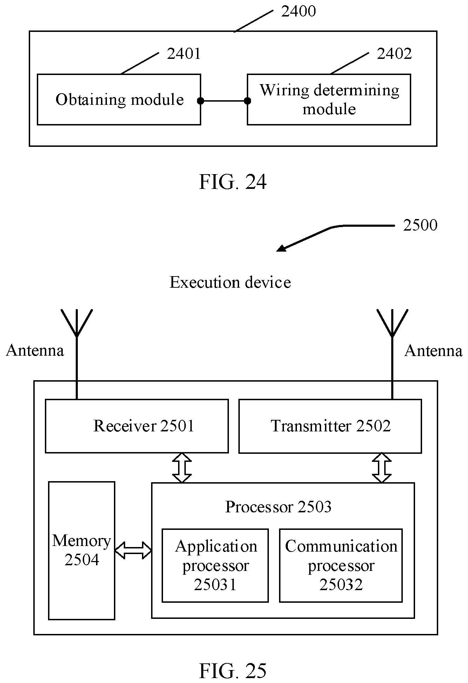

FIG. 24 is a schematic diagram of a structure of a circuit wiring determining apparatus according to an embodiment of this application. The apparatus 2400 includes an obtaining module 2401 and a wiring determining module 2402.

The obtaining module 2401 is configured to: obtain first information of a plurality of input/output ports and second information of a plurality of transfer unit pins of a circuit, where the plurality of ports include a plurality of first ports and a plurality of second ports, the plurality of pins include a plurality of first pins and a plurality of second pins, a plurality of first candidate connection paths are formed between the plurality of first ports and the plurality of first pins, and a plurality of second candidate connection paths are formed between the plurality of second ports and the plurality of second pins.

For specific descriptions of the obtaining module 2301, refer to the descriptions of step 2201 in the foregoing embodiment. Details are not described herein again.

The wiring determining module 2402, configured to: determine, based on a premise that the first information and the second information indicate that importance of the first port is higher than importance of the second port, at least one first target connection path from the plurality of first candidate connection paths based on information about the plurality of first candidate connection paths and information about the plurality of second candidate connection paths; and determine at least one second target connection path from the plurality of second candidate connection paths based on information about the at least one first target connection path and the information about the plurality of second candidate connection paths.

For specific descriptions of the wiring determining module 2402, refer to the descriptions of step 2202 in the foregoing embodiment. Details are not described herein again.

In a possible implementation, the port is an input/output I/O unit, and the pin is a transfer unit bump.

In a possible implementation, at least two first candidate connection paths of the plurality of first candidate connection paths intersect with each other; or

each second candidate connection path does not intersect with the plurality of first candidate connection paths; or the at least one second candidate connection path intersects with the at least one first candidate connection path of the plurality of first candidate connection paths; or at least two second candidate connection paths of the plurality of second candidate connection paths intersect with each other.

In a possible implementation, the apparatus further includes:
an output module 2403, configured to: output a plurality of first initial candidate connection paths formed between the plurality of first ports and the plurality of first pins, and obtain the plurality of first candidate connection paths based on a modification instruction for the plurality of first initial candidate connection paths.

In a possible implementation, the apparatus further includes:
an output module 2403, configured to output the at least one first target connection path.

In a possible implementation, a first function or a second function is one of the following: signal transmission, grounding, and electric energy transmission.

In a possible implementation, the based on information about the at least one first target connection path and the information about the plurality of second candidate connection paths includes:
based on the information about the at least one first connection path and the information about the plurality of second candidate connection paths, and not based on information about a first candidate connection path, other than the at least one first target connection path, in the plurality of first candidate connection paths.

In a possible implementation, the output module 2403 is further configured to:
output a plurality of second initial candidate connection paths formed between the plurality of second ports and the plurality of second pins, and obtain the plurality of second candidate connection paths based on a modification instruction for the plurality of second initial candidate connection paths.

In a possible implementation, the output module 2403 is further configured to:
output the at least one second target connection path.

In a possible implementation, any two connection paths of the at least one first target connection path do not intersect with each other, any two connection paths of the at least one second target connection path do not intersect with each other, and each first target connection path does not intersect with any second target connection path of the at least one second target connection path.

In a possible implementation, the obtaining module 2401 is further configured to:
obtain at least one modified first target connection path based on modification information of the at least one first target connection path.

The based on information about the at least one first target connection path and the information about the plurality of second candidate connection paths includes: based on information about the at least one modified first target connection path and the information about the plurality of second candidate connection paths.

The following describes an execution device provided in embodiments of this application. FIG. 25 is a schematic diagram of a structure of an execution device according to an embodiment of this application. The execution device 2500 may be specifically represented as a mobile phone, a tablet, a notebook computer, an intelligent wearable device, or the like. This is not limited herein. Specifically, the execution device 2500 includes a receiver 2501, a transmitter 2502, a processor 2503 (there may be one or more processors 2503 in the execution device 2500, and one processor is used as an example in FIG. 25), and a memory 2504. The processor 2503 may include an application processor 25031 and a communication processor 25032. In some embodiments of this application, the receiver 2501, the transmitter 2502, the processor 2503, and the memory 2504 may be connected by using a bus or in another manner.

The memory 2504 may include a read-only memory and a random access memory, and provide an instruction and data for the processor 2503. A part of the memory 2504 may further include a non-volatile random access memory (non-volatile random access memory, NVRAM). The memory 2504 stores a processor and operation instructions, an executable module or a data structure, a subnet thereof, or an extended set thereof. The operation instructions may include various operation instructions to implement various operations.

The processor 2503 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in embodiments of this application may be applied to a processor 2503 or may be implemented by a processor 2503. The processor 2503 may be an integrated circuit chip and has a signal processing capability. In an implementation process, steps in the foregoing methods can be implemented by using a hardware integrated logic circuit in the processor 2503, or by using instructions in a form of software. The processor 2503 may be a general-purpose processor, a digital signal processor (digital signal processing, DSP), a microprocessor, or a microcontroller. The processor 2503 may further include an application-specific integrated circuit (application-specific integrated circuit, ASIC), a field programmable gate array (field programmable gate array, FPGA) or another programmable logic device, a discrete gate, or a transistor logic device, or a discrete hardware component. The processor 2503 may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly executed and accomplished by a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory 2504, and the processor 2503 reads information in the memory 2504 and completes the steps in the foregoing methods in combination with hardware of the processor.

The receiver 2501 may be configured to: receive input digit or character information, and generate a signal input related to a related setting and function control of the execution device. The transmitter 2502 may be configured to output digit or character information; and the transmitter 2502 may be further configured to send an instruction to a disk group to modify data in the disk group.

In embodiments of this application, in one case, the processor 2503 is configured to perform the steps of the circuit wiring determining method in the embodiments corresponding to FIG. 7a and FIG. 22.

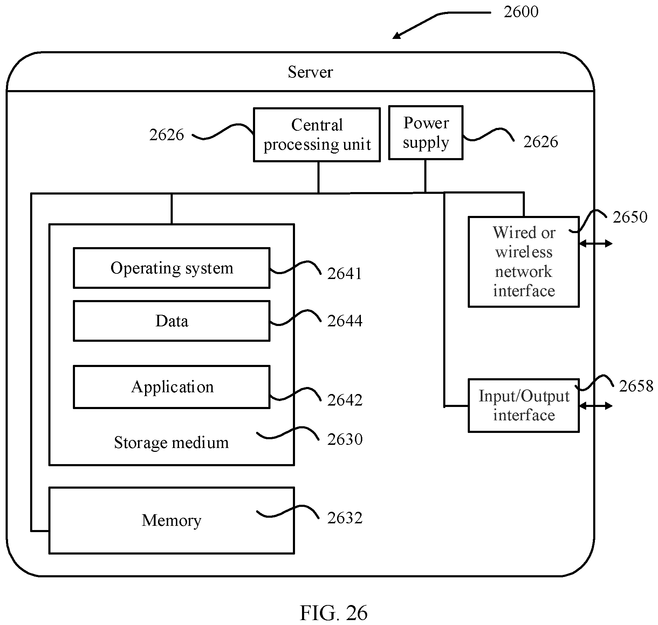

An embodiment of this application further provides a server. FIG. 26 is a schematic diagram of a structure of a server according to an embodiment of this application. Specifically, the server 2600 is implemented by one or more servers. The server 2600 may differ greatly based on different configurations or performance, and may include one or more central processing units (central processing units, CPUs) 2626 (for example, one or more processors), a memory 2632, and one or more storage media 2630 (for example, one or more mass storage devices) for storing an application 2642 or data 2644. The memory 2632 and the storage medium 2630 may be transitory storage or persistent storage. The program stored in the storage medium 2630 may include one or more modules (not shown in the figure), and each module may include a series of instruction operations for the server. Further, the central processing unit 2626 may be configured to: communicate with the storage medium 2630, and perform, on the server 2600, the series of instruction operations in the storage medium 2630.

The server 2600 may further include one or more power supplies 2626, one or more wired or wireless network interfaces 2650, one or more input/output interfaces 2658, or one or more operating systems 2641, for example, Windows ServerTM, Mac OS XTM, UnixTM, LinuxTM, and FreeBSDTM.

In embodiments of this application, the central processing unit 2626 is configured to perform the steps of the circuit wiring determining method in the embodiments corresponding to FIG. 7a and FIG. 22.

An embodiment of this application further provides a computer program product including computer-readable instructions. When the computer program product runs on a computer, the computer is enabled to perform steps performed by the foregoing execution device, or the computer is enabled to perform steps performed by the foregoing training device.

An embodiment of this application further provides a computer-readable storage medium. The computer-readable storage medium stores a program used to process a signal. When the program runs on a computer, the computer is enabled to perform steps performed by the foregoing execution device; or the computer is enabled to perform steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in an execution device performs the circuit wiring determining method described in the foregoing embodiments, or a chip in a training device performs the steps related to model training in the foregoing embodiments. Optionally, the storage unit is a storage unit in the chip, for example, a register or a cache. The storage unit may alternatively be a storage unit that is in a wireless access device and that is outside the chip, for example, a read-only memory (read-only memory, ROM) or another type of static storage device that can store static information and instructions, or a random access memory (random access memory, RAM).

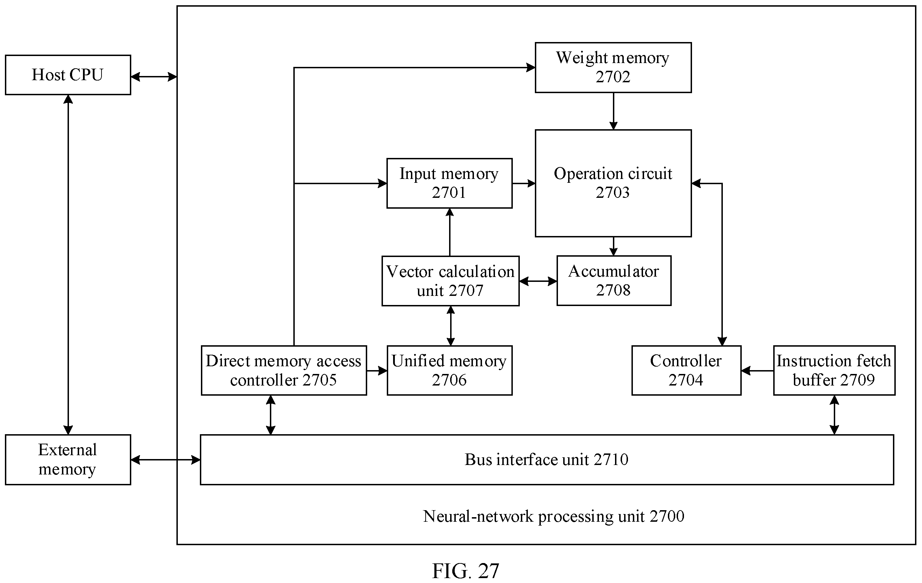

Specifically, FIG. 27 is a schematic diagram of a structure of a chip according to an embodiment of this application. The chip may be represented as a neural-network processing unit NPU 2700. The NPU 2700 is mounted to a host CPU (Host CPU) as a coprocessor, and the host CPU allocates a task. A core part of the NPU is an operation circuit 2703. The operation circuit 2703 is controlled by a controller 2704 to extract matrix data in a memory and perform a multiplication operation.

In some implementations, the operation circuit 2703 includes a plurality of processing units (Process Engines, PEs). In some implementations, the operation circuit 2703 is a two-dimensional systolic array. The operation circuit 2703 may alternatively be a one-dimensional systolic array or another electronic circuit that can perform mathematical operations such as multiplication and addition. In some implementations, the operation circuit 2703 is a general-purpose matrix processor.

For example, it is assumed that there is an input matrix A, a weight matrix B, and an output matrix C. The operation circuit fetches data corresponding to the matrix B from a weight memory 2702 and buffers the data on each PE in the operation circuit. The operation circuit fetches data of the matrix A from an input memory 2701, to perform a matrix operation with the matrix B to obtain a partial result or a final result of a matrix, and stores the result into an accumulator (accumulator) 2708.

A unified memory 2706 is configured to store input data and output data. Weight data is directly transferred to the weight memory 2702 by using a direct memory access controller (Direct Memory Access Controller, DMAC) 2705. The input data is also transferred to the unified memory 2706 by using the DMAC.

A BIU is a bus interface unit, namely, a bus interface unit 2710, and is configured to perform interaction between an AXI bus and the DMAC and between the AXI bus and an instruction fetch buffer (Instruction Fetch Buffer, IFB) 2709.

A bus interface unit 2710 (Bus Interface Unit, BIU for short) is used by an instruction fetch buffer 2709 to obtain an instruction from an external memory, and further used by the direct memory access controller 2705 to obtain original data of the input matrix A or the weight matrix B from the external memory.

The DMAC is mainly configured to transfer input data in the external memory DDR to the unified memory 2706, transfer weight data to the weight memory 2702, or transfer input data to the input memory 2701.

A vector calculation unit 2707 includes a plurality of operation processing units; and if necessary, performs further processing such as vector multiplication, vector addition, an exponential operation, a logarithmic operation, or value comparison on an output of the operation circuit. The vector calculation unit 2707 is mainly used for the non-convolutional or fully connected layer network calculation in a neural network, such as batch normalization (batch normalization), pixel-level summation, and upsampling of a feature map.

In some implementations, the vector calculation unit 2707 can store a processed output vector in the unified memory 2706. For example, the vector calculation unit 2707 may apply a linear function or a nonlinear function to output of the operation circuit 2703. For example, linear interpolation is performed on a feature plane extracted by a convolutional layer. For another example, vectors of values are accumulated, to generate an activation value. In some implementations, the vector calculation unit 2707 generates a normalized value, a value obtained after pixel-level summation, or a combination thereof. In some implementations, the processed output vector can be used as activation input for the operation circuit 2703, for example, the processed output vector is used in a subsequent layer in the neural network.

The instruction fetch buffer (instruction fetch buffer) 2709 connected to the controller 2704 is configured to store instructions used by the controller 2704.

The unified memory 2706, the input memory 2701, the weight memory 2702, and the instruction fetch buffer 2709 all are on-chip memories. The external memory is private for a hardware architecture of the NPU.

The processor mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one location, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communications buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement embodiments, all or some of embodiments may be implemented in a form of a computer program product.

The computer program product includes one or more computer instructions. When the computer program instructions are loaded and executed on the computer, the procedures or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state disk, SSD)), or the like.

## Claims

1. A circuit wiring determining method, wherein the method comprises:

    obtaining first information of a plurality of ports and second information of a plurality of pins of a circuit, wherein a plurality of candidate connection paths are comprised between the plurality of ports and the plurality of pins, the candidate connection path is a connection path between the port and the pin, the first information indicates a location feature of the port, and the second information indicates a location feature of the pin; and
    obtaining, based on the first information and the second information, a cost value of each candidate connection path by using a machine learning model, wherein the cost value indicates impact of the candidate connection path on a total quantity of connection paths between the plurality of ports and the plurality of pins, and the cost value is used to determine at least one target connection path from the plurality of candidate connection paths.

2. The method according to claim 1, wherein the method further comprises:

    determining the at least one target connection path from the plurality of candidate connection paths based on the cost value; or
    sending the cost value to a terminal device, wherein the cost value indicates the terminal device to determine the at least one target connection path from the plurality of candidate connection paths based on the cost value.

3. The method according to claim 2, wherein the plurality of ports comprise a plurality of first ports and a plurality of second ports, the plurality of pins comprise a plurality of first pins and a plurality of second pins, the plurality of first ports and the plurality of first pins are configured to implement a first function, the plurality of second ports and the plurality of second pins are configured to implement a second function, and the first function is different from the second function;

    the plurality of candidate connection paths comprise a plurality of first candidate connection paths formed between the plurality of first ports and the plurality of first pins and a plurality of second candidate connection paths formed between the plurality of second ports and the plurality of second pins;
    the obtaining, based on the first information and the second information, a cost value of each candidate connection path by using a machine learning model comprises: obtaining, based on information about the plurality of first candidate connection paths and information about the plurality of second candidate connection paths, a cost value of each first candidate connection path by using the machine learning model; and
    the determining the at least one target connection path from the plurality of candidate connection paths based on the cost value comprises: determining at least one first target connection path from the plurality of first candidate connection paths based on the cost value of each first candidate connection path.

4. The method according to claim 3, wherein the obtaining, based on the first information and the second information, a cost value of each candidate connection path by using a machine learning model further comprises: obtaining, based on information about the at least one first target connection path and the information about the plurality of second candidate connection paths, a cost value of each second candidate connection path by using the machine learning model; and

the determining the at least one target connection path from the plurality of candidate connection paths based on the cost value further comprises: determining at least one second target connection path from the plurality of second candidate connection paths based on the cost value of each second candidate connection path.

5. The method according to claim 4, wherein
each second candidate connection path does not intersect with the plurality of first candidate connection paths.

6. The method according to claim 5, wherein the plurality of candidate connection paths further comprise at least one third candidate connection path formed between the plurality of second ports and the plurality of second pins, the at least one third candidate connection path intersects with a first candidate connection path other than the at least one first target connection path of the plurality of first candidate connection paths, and the based on information about the at least one first target connection path and the information about the plurality of second candidate connection paths comprises:

based on the information about the at least one first target connection path, the information about the plurality of second candidate connection paths, and information about the at least one third candidate connection path.

7. The method according to any one of claims 4 to 6, wherein
each second target connection path does not intersect with the at least one first target connection path.

8. The method according to any one of claims 4 to 7, wherein the method further comprises:

obtaining at least one modified first target connection path based on modification information of the at least one first target connection path; and

the based on information about the at least one first target connection path and the information about the plurality of second candidate connection paths comprises: based on information about the at least one modified first target connection path and the information about the plurality of second candidate connection paths.

9. The method according to any one of claims 4 to 8, wherein the method further comprises:
outputting the at least one second target connection path.

10. The method according to any one of claims 3 to 9, wherein the method further comprises:
outputting the at least one first target connection path.

11. The method according to any one of claims 3 to 10, wherein the first function or the second function is one of the following: signal transmission, grounding, and electric energy transmission.

12. The method according to any one of claims 3 to 11, wherein the first information indicates that a priority of the first port is higher than a priority of the second port; or the second information indicates that a priority of the first pin is higher than a priority of the second pin.

13. The method according to any one of claims 2 to 12, wherein the cost value indicates negative impact of the candidate connection path on the total quantity of connection paths between the plurality of ports and the plurality of pins, the plurality of candidate connection paths comprise a plurality of groups of candidate connection paths, and each group of candidate connection paths of the plurality of groups of candidate connection paths corresponds to a pair of a port and a pin; and

the determining the at least one target connection path from the plurality of candidate connection paths based on the cost value comprises:

determining, from each group of candidate connection paths based on the cost value, a candidate connection path with a lowest cost value as the target connection path.

14. The method according to any one of claims 2 to 13, wherein the determining the at least one target connection path from the plurality of candidate connection paths based on the cost value comprises:
determining, based on the cost value, the at least one target connection path from the plurality of candidate connection paths by using a minimum cost maximum flow algorithm.

15. The method according to any one of claims 1 to 14, wherein the first information further indicates at least one of the following information: a function of the port or a priority of the port; and
the second information further indicates at least one of the following information: a function of the pin or a priority of the pin.

16. The method according to any one of claims 1 to 15, wherein the candidate connection path comprises the port and the pin at two ends and at least one relay point that the candidate connection path passes through, and the relay point is a middle location point between adjacent pins; and
the based on the first information and the second information comprises:
based on first information of the port comprised in the candidate connection path, second information of the pin comprised in the candidate connection path, and location information of the at least one relay point.

17. The method according to any one of claims 1 to 16, wherein the port is an input/output I/O unit, and the pin is a transfer unit bump.

18. A circuit wiring determining apparatus, wherein the apparatus comprises:

an obtaining module, configured to obtain first information of a plurality of ports and second information of a plurality of pins of a circuit, wherein a plurality of candidate connection paths are comprised between the plurality of ports and the plurality of pins, the candidate connection path is a connection path between the port and the pin, the first information indicates a location feature of the port, and the second information indicates a location feature of the pin; and
a cost value determining module, configured to obtain, based on the first information and the second information, a cost value of each candidate connection path by using a machine learning model, wherein the cost value indicates impact of the candidate connection path on a total quantity of connection paths between the plurality of ports and the plurality of pins, and the cost value is used to determine at least one target connection path from the plurality of candidate connection paths.

19. The apparatus according to claim 18, wherein the apparatus further comprises:

a wiring determining module, configured to determine the at least one target connection path from the plurality of candidate connection paths based on the cost value; or
a sending module, configured to send the cost value to a terminal device, wherein the cost value indicates the terminal device to determine the at least one target connection path from the plurality of candidate connection paths based on the cost value.

20. The apparatus according to claim 19, wherein the plurality of ports comprise a plurality of first ports and a plurality of second ports, the plurality of pins comprise a plurality of first pins and a plurality of second pins, the plurality of first ports and the plurality of first pins are configured to implement a first function, the plurality of second ports and the plurality of second pins are configured to implement a second function, and the first function is different from the second function;

the plurality of candidate connection paths comprise a plurality of first candidate connection paths formed between the plurality of first ports and the plurality of first pins and a plurality of second candidate connection paths formed between the plurality of second ports and the plurality of second pins;
the cost value determining module is specifically configured to obtain, based on information about the plurality of first candidate connection paths and information about the plurality of second candidate connection paths, a cost value of each first candidate connection path by using the machine learning model; and
the wiring determining module is specifically configured to determine at least one first target connection path from the plurality of first candidate connection paths based on the cost value of each first candidate connection path.

21. The apparatus according to claim 20, wherein the cost value determining module is further configured to obtain, based on information about the at least one first target connection path and the information about the plurality of second candidate connection paths, a cost value of each second candidate connection path by using the machine learning model; and

the wiring determining module is further configured to determine at least one second target connection path from the plurality of second candidate connection paths based on the cost value of each second candidate connection path.

22. The apparatus according to claim 21, wherein
each second candidate connection path does not intersect with the plurality of first candidate connection paths.

23. The apparatus according to claim 22, wherein the plurality of candidate connection paths further comprise at least one third candidate connection path formed between the plurality of second ports and the plurality of second pins, the at least one third candidate connection path intersects with a first candidate connection path other than the at least one first target connection path of the plurality of first candidate connection paths, and the cost value determining module is specifically configured to:
be based on the information about the at least one first target connection path, the information about the plurality of second candidate connection paths, and information about the at least one third candidate connection path.

24. The apparatus according to any one of claims 21 to 23, wherein
each second target connection path does not intersect with the at least one first target connection path.

25. The apparatus according to any one of claims 21 to 24, wherein the obtaining module is further configured to:

obtain at least one modified first target connection path based on modification information of the at least one first target connection path; and
the cost value determining module is specifically configured to be based on information about the at least one modified first target connection path and the information about the plurality of second candidate connection paths.

26. The apparatus according to any one of claims 21 to 25, wherein the apparatus further comprises:
an output module, configured to output the at least one second target connection path.

27. The apparatus according to any one of claims 20 to 26, wherein the output module is further configured to:
output the at least one first target connection path.

28. The apparatus according to any one of claims 25 to 30, wherein the first function or the second function is one of the following: signal transmission, grounding, and electric energy transmission.

29. The apparatus according to any one of claims 20 to 28, wherein the first information indicates that a priority of the first port is higher than a priority of the second port; or the second information indicates that a priority of the first pin is higher than a priority of the second pin.

30. The apparatus according to any one of claims 19 to 29, wherein the cost value indicates negative impact of the candidate connection path on the total quantity of connection paths between the plurality of ports and the plurality of pins, the plurality of candidate connection paths comprise a plurality of groups of candidate connection paths, and each group of candidate connection paths of the plurality of groups of candidate connection paths corresponds to a pair of a port and a pin; and
the wiring determining module is specifically configured to:
determine, from each group of candidate connection paths based on the cost value, a candidate connection path with a lowest cost value as the target connection path.

31. The apparatus according to any one of claims 19 to 30, wherein the wiring determining module is further configured to:
determine, based on the cost value, the at least one target connection path from the plurality of candidate connection paths by using a minimum cost maximum flow algorithm.

32. The apparatus according to any one of claims 18 to 31, wherein the first information further indicates at least one of the following information: a function of the port or a priority of the port; and
the second information further indicates at least one of the following information: a function of the pin or a priority of the pin.

33. The apparatus according to any one of claims 18 to 32, wherein the candidate connection path comprises the port and the pin at two ends and at least one relay point that the candidate connection path passes through, and the relay point is a middle location point between adjacent pins; and

the based on the first information and the second information comprises:
based on first information of the port comprised in the candidate connection path, second information of the pin comprised in the candidate connection path, and location information of the at least one relay point.

**34.** The apparatus according to any one of claims 18 to 33, wherein the port is an input/output I/O unit, and the pin is a transfer unit bump.

**35.** A circuit wiring determining apparatus, wherein the apparatus comprises a memory and a processor, the memory stores code, and the processor is configured to obtain the code and perform the method according to any one of claims 1 to 17.

**36.** A computer-readable storage medium, comprising computer-readable instructions, wherein when the computer-readable instructions are run on a computer device, the computer device is enabled to perform the method according to any one of claims 1 to 17.

**37.** A computer program product, comprising computer-readable instructions, wherein when the computer-readable instructions are run on a computer device, the computer device is enabled to perform the method according to any one of claims 1 to 17.

FIG. 1

FIG. 2

101

Parameter

I/O
information

Bump
information

102

Circuit design
application
(for example, EDA)

Machine
learning
model

Connection
algorithm

103

Circuit layout

Connection
relationship
between pin units

FIG. 3

Parameter for a chip

Wiring result

Terminal 100

Server 200

FIG. 4

Terminal 100

FIG. 5a

FIG. 5b

FIG. 6

Obtain first information of a plurality of ports and second information of a plurality of pins of a circuit / 701

Obtain, based on the first information and the second information, a cost value of each candidate connection path by using a machine learning model, where the cost value indicates impact of the candidate connection path on a total quantity of connection paths between the plurality of ports and the plurality of pins, and the cost value is used to determine at least one target connection path from a plurality of candidate connection paths / 702

FIG. 7a

Terminal device | Server

Obtain first information of a plurality of ports and second information of a plurality of pins of a circuit

First information and second information

Obtain, based on the first information and the second information, a cost value of each candidate connection path by using a machine learning model

Determine at least one target connection path from a plurality of candidate connection paths based on the cost value

At least one target connection path

FIG. 7b

```
┌──────────────────────┐                    ┌──────────────────────┐
│   Terminal device    │                    │        Server        │
└──────────┬───────────┘                    └──────────┬───────────┘
           │                                           │
┌──────────┴────────────────────┐                      │
│ Obtain first information of a  │                      │
│ plurality of ports and second  │                     │
│ information of a plurality of   │                    │
│ pins of a circuit              │                      │
└──────────┬────────────────────┘                      │
           │                                           │
           │  First information and second information │
           │─────────────────────────────────────────▶│
           │                                           │
           │                      ┌────────────────────┴──────────┐
           │                      │ Obtain, based on the first     │
           │                      │ information and the second     │
           │                      │ information, a cost value of    │
           │                      │ each candidate connection path │
           │                      │ by using a machine learning    │
           │                      │ model                          │
           │                      └────────────────────┬──────────┘
           │              Cost value                    │
           │◀──────────────────────────────────────────│
           │                                           │
┌──────────┴────────────────────┐                      │
│ Determine at least one target  │                     │
│ connection path from a          │                    │
│ plurality of candidate          │                    │
│ connection paths based on the   │                    │
│ cost value                     │                      │
└──────────┬────────────────────┘                      │
           │                                           │
```

FIG. 7c

```
┌──────────────────┐                    ┌──────────────────┐
│  Terminal device │                    │      Server      │
└──────────────────┘                    └──────────────────┘
         │                                       │
┌────────────────────────────┐                   │
│ Obtain first information of │                   │
│ a plurality of ports and    │                   │
│ second information of a     │                   │
│ plurality of pins of a      │                   │
│ circuit                     │                   │
└────────────────────────────┘                   │
┌────────────────────────────┐                   │
│ Obtain, based on the first  │                   │
│ information and the second  │                   │
│ information, a cost value of│                   │
│ each candidate connection   │                   │
│ path by using a machine     │                   │
│ learning model              │                   │
└────────────────────────────┘                   │
         │         Cost value            │
         │ ────────────────────────────> │
         │                        ┌─────────────────────────┐
         │                        │ Determine at least one   │
         │                        │ target connection path   │
         │                        │ from a plurality of      │
         │                        │ candidate connection     │
         │                        │ paths based on the cost  │
         │                        │ value                    │
         │                        └─────────────────────────┘
         │  At least one target connection path
         │ <──────────────────────────── │
         │                                │
```

FIG. 7d

| Terminal device | | Server |
|---|---|---|

Obtain first information of a plurality of ports and second information of a plurality of pins of a circuit

Obtain, based on the first information and the second information, a cost value of each candidate connection path by using a machine learning model

Determine at least one target connection path from a plurality of candidate connection paths based on the cost value

FIG. 7e

| Terminal device | | Server |
|---|---|---|

Obtain first information of a plurality of ports and second information of a plurality of pins of a circuit

Obtain, based on the first information and the second information, a cost value of each candidate connection path by using a machine learning model

Determine at least one target connection path from a plurality of candidate connection paths based on the cost value

FIG. 7f

Add and
open a file

Element library

I/O unit

Bump

FIG. 8

FIG. 9

Add and
open a file

Element library

I/O unit

Bump

| Priority 1 |
| Priority 2 |
| Priority 3 |
| Custom level |

FIG. 10a

Add and
open a file

Element library

I/O unit

Bump

Edit

Delete

Move

Priority editing

Category editing

Priority 1

Priority 2

Priority 3

Custom
level

EP 4 510 036 A1

FIG. 10b

FIG. 11a

FIG. 11b

EP 4 510 036 A1

Add and
open a file

Start

Element library

I/O unit

Bump

FIG. 12

Add and open a file

Start

Element library

I/O unit

Bump

Wiring result

FIG. 13

| Add and open a file | Start | > | By priority |
| --- | --- | --- | --- |
| | | | Global consistency |

Element library

I/O unit

Bump

FIG. 14

FIG. 15

EP 4 510 036 A1

Add and
open a file

Continue

Element library

I/O unit

Bump

>

Wiring

Wiring result
(priority 1)

FIG. 16

FIG. 17

Wiring result:
priority 1
priority 2

Add and open a file

Continue

Element library

I/O unit

Bump

Wiring

FIG. 18

FIG. 19

FIG. 20

FIG. 21

Obtain first information of a plurality of ports and second information of a plurality of pins of a circuit, where the plurality of ports include a plurality of first ports and a plurality of second input/output units, the plurality of pins include a plurality of first pins and a plurality of second pins, a plurality of first candidate connection paths are formed between the plurality of first ports and the plurality of first pins, and a plurality of second candidate connection paths are formed between the plurality of second ports and the plurality of second pins

2201

Determine, based on a premise that the first information and the second information indicate that importance of the first port is higher than importance of the second port, at least one first target connection path from the plurality of first candidate connection paths based on information about the plurality of first candidate connection paths and information about the plurality of second candidate connection paths; and determine at least one second target connection path from the plurality of second candidate connection paths based on information about the at least one first target connection path and the information about the plurality of second candidate connection paths

2202

FIG. 22

2300

2301

Obtaining module

2302

Cost value determining module

2303

Wiring determining module

FIG. 23

2400

2401                                    2402

| Obtaining module | —— | Wiring determining module |

FIG. 24

2500

Execution device

Antenna                              Antenna

| Receiver 2501 | Transmitter 2502 |

Processor 2503

| Memory 2504 | Application processor 25031 | Communication processor 25032 |

FIG. 25

2600

Server

2626

Central
processing unit

Power
supply

2626

Operating system

2641

Data

2644

Application

2642

Storage medium

2630

Memory

2632

Wired or
wireless
network
interface

2650

Input/Output
interface

2658

FIG. 26

EP 4 510 036 A1

| | |
|---|---|
| Host CPU | |

Weight memory 2702

Input memory 2701

Operation circuit 2703

Vector calculation unit 2707

Accumulator 2708

Direct memory access controller 2705

Unified memory 2706

Controller 2704

Instruction fetch buffer 2709

External memory

Bus interface unit 2710

Neural-network processing unit 2700

FIG. 27

**INTERNATIONAL SEARCH REPORT**

International application No.

**PCT/CN2023/084681**

**A. CLASSIFICATION OF SUBJECT MATTER**

G06F30/394(2020.01)i

According to International Patent Classification (IPC) or to both national classification and IPC

**B. FIELDS SEARCHED**

Minimum documentation searched (classification system followed by classification symbols)

G06F30/-(2020.01)

Documentation searched other than minimum documentation to the extent that such documents are included in the fields searched

Electronic data base consulted during the international search (name of data base and, where practicable, search terms used)

CNABS, CNTXT, ENTXT, DWPI, VEN, CNKI, CJFD: 备选, 候选, 待选, 布线, 连接路径, 连线, 路径, 线路, 走线, 引线, 机器学习, 神经网络, 个数, 数量, 数目, 芯片, 拥塞, candidate, routing, connect, path, machine, learning, neural, network , number, chip, congestion

**C. DOCUMENTS CONSIDERED TO BE RELEVANT**

| Category* | Citation of document, with indication, where appropriate, of the relevant passages | Relevant to claim No. |
|---|---|---|
| PX | CN 114925651 A (HUAWEI TECHNOLOGIES CO., LTD.) 19 August 2022 (2022-08-19) claims 1-37 | 1-37 |
| A | CN 113673196 A (SHANGHAI LAXCEN SOFTWARE TECHNOLOGY CO., LTD.) 19 November 2021 (2021-11-19) entire document | 1-37 |
| A | GB 2589354 A (INSTADEEP LTD.) 02 June 2021 (2021-06-02) entire document | 1-37 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 June 2023** | **12 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/084681**

| Patent document cited in search report | | | Publication date (day/month/year) | Patent family member(s) | | | Publication date (day/month/year) |
|---|---|---|---|---|---|---|---|
| CN | 114925651 | A | 19 August 2022 | None | | | |
| CN | 113673196 | A | 19 November 2021 | None | | | |
| GB | 2589354 | A | 02 June 2021 | GB | 2589351 | A | 02 June 2021 |
| | | | | GB | 2589352 | A | 02 June 2021 |
| | | | | GB | 2589353 | A | 02 June 2021 |
| | | | | WO | 2021105714 | A1 | 03 June 2021 |
| | | | | US | 2022083864 | A1 | 17 March 2022 |
| | | | | EP | 4066147 | A1 | 15 October 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210469023